# DEMANDE DE BREVET EUROPEEN

(11) **EP 3 890 077 A1**
(43) Date de publication de la demande: **06.10.2021**
(21) Numéro de dépôt: 20166569.2
(22) Date de dépôt: 30.03.2020
(51) Int. Cl.: H01M 4/70, H01M 10/04, H01M 2/10, H01M 4/04, H01M 10/0525, H01M 2/02, H01M 2/26, H01M 10/056, H01M 10/0585

(54) **BATTERIE Á IONS DE LITHIUM ET SON PROCÉDÉ DE FABRICATION**

(71) Demandeur: I-TEN, 69570 Dardilly (FR)
(72) Inventeur: GABEN, Fabien, 69570 Dardilly (FR)
(74) Mandataire: Schmidt, Martin Peter

(57) **Abrégé**

Batterie (1000) comprenant au moins une cellule élémentaire (100) formée par une anode (20), un électrolyte (30) et une cathode (50), définissant un empilement (I),
ledit empilement (I) et ladite batterie présentant six faces, à savoir
- deux faces frontales (F1, F2) mutuellement opposées,
- deux faces latérales (F3, F5) mutuellement opposées,
- et deux faces longitudinales (F4, F6), mutuellement opposées,
étant entendu que la première face longitudinale (F6) de la batterie comprend au moins une zone de connexion anodique (1002) et qu'une seconde face longitudinale (F4) de la batterie comprend au moins une zone de connexion cathodique (1006), lesdites zones de connexion anodique (1002) et cathodique (1006) étant latéralement opposées, caractérisée en ce que
- selon un premier sens longitudinal (XX') de la batterie, chaque substrat collecteur de courant anodique (10) fait saillie par rapport à la fois à chaque couche d'anode (20), à chaque couche de matériau d'électrolyte (30) ou couche de séparateur imprégné d'un électrolyte (31), à chaque couche de cathode (50) ainsi qu'à chaque couche de substrat collecteur de courant cathodique (40), et
- selon un second sens longitudinal (XX") de la batterie, opposé audit premier sens longitudinal (XX'), chaque substrat collecteur de courant cathodique (40) fait saillie par rapport à la fois à chaque couche d'anode (20), à chaque couche de matériau d'électrolyte (30) ou couche de séparateur imprégné d'un électrolyte (31), à chaque couche de cathode (50) ainsi qu'à chaque couche de substrat collecteur de courant anodique (10).

## Description

### Domaine technique de l'invention

La présente invention se rapporte au domaine des batteries, et plus particulièrement aux batteries à ions de lithium. L'invention concerne des batteries à ions de lithium avec une architecture nouvelle qui leur confère une durée de vie améliorée. L'invention concerne également un nouveau procédé de fabrication de telles batteries.

### Etat de la technique

Des batteries rechargeables entièrement solides à ions de lithium sont connues. WO 2016/001584 (I-TEN) décrit une batterie à ions de lithium fabriquée à partir de feuilles anodiques comprenant un substrat conducteur recouvert successivement d'une couche d'anode et d'une couche d'électrolyte, et de feuilles cathodiques comprenant un substrat conducteur recouvert successivement d'une couche de cathode et d'une couche d'électrolyte ; ces feuilles sont découpées, avant ou après dépôt, selon des motifs en forme de U. Ces feuilles sont ensuite empilées de manière alternée afin de constituer un empilement de plusieurs cellules élémentaires. Les motifs de découpe des feuilles anodiques et cathodiques sont placés en configuration « tête bêche » de manière à ce que l'empilement des cathodes et des anodes soit décalé latéralement. Après l'étape d'empilement, on dépose un système d'encapsulation en couche épaisse d'une dizaine de microns sur l'empilement et dans les cavités disponibles présentes au sein de l'empilement. Ceci permet d'assurer, d'une part, la rigidité de la structure au niveau des plans de coupe et, d'autre part, la protection de la cellule de la batterie vis-à-vis de l'atmosphère. Une fois l'empilement réalisé et encapsulé, on le découpe suivant des plans de coupe pour obtenir des batteries unitaires, avec la mise à nu sur chacun des plans de coupe des zones de connexion cathodique et des zones de connexion anodique des batteries. Il se trouve que lors de ces découpes, le système d'encapsulation peut être arraché, ce qui entraîne une discontinuité de l'étanchéité de la batterie. Il est aussi connu d'ajouter des terminaisons (i.e. des contacts électriques) à l'endroit où ces zones de connexion cathodique et anodique sont apparentes.

Il est apparu que cette solution connue peut présenter cependant certains inconvénients. En effet, en fonction du positionnement des électrodes, notamment de la proximité des bords des électrodes pour les batteries multicouches et de la propreté des découpes, un courant de fuite peut apparaitre sur les extrémités, typiquement sous la forme d'un court-circuit rampant. Ce court-circuit rampant diminue la performance de la batterie, et ce, malgré l'utilisation d'un système d'encapsulation autour de la batterie et aux abords des zones de connexion cathodique et anodique. Par ailleurs, on constate parfois un dépôt insatisfaisant du système d'encapsulation sur la batterie, notamment sur les bords de la batterie au niveau des espaces créés par les décalages latéraux des électrodes sur les bords de batterie.

La présente invention vise à remédier au moins en partie à certains inconvénients de l'art antérieur évoqués ci-dessus, notamment à obtenir des batteries rechargeables à ions de lithium à forte densité d'énergie et forte densité de puissance.

Elle vise en particulier à accroitre le rendement de production des batteries rechargeables à ions de lithium à forte densité d'énergie et forte densité de puissance, et à réaliser des encapsulations plus performantes à moindre coût.

Elle vise en particulier à proposer un procédé qui diminue le risque de court-circuit rampant ou accidentel et qui permet de fabriquer une batterie présentant une faible autodécharge.

Elle vise en particulier à proposer un procédé, qui permet de fabriquer de manière simple, fiable et rapide une batterie présentant une durée de vie très élevée.

Elle vise également à proposer un procédé de fabrication de batteries simple, rapide et économique.

### Objets de l'invention

Un premier objet de l'invention est une batterie comprenant au moins une cellule élémentaire, chaque cellule élémentaire comprend successivement un substrat collecteur de courant anodique, une couche d'anode, au moins une couche d'un matériau d'électrolyte et/ou au moins une couche de séparateur imprégné d'un électrolyte, une couche de cathode, et un substrat collecteur de courant cathodique,
sachant que dans le cas où ladite batterie comprend une pluralité de cellules élémentaires, lesdites cellules élémentaires sont disposées les unes au-dessous des autres, à savoir superposées selon une direction frontale au plan principal de la batterie, de sorte que, de préférence :
∘ le substrat collecteur de courant anodique est le substrat collecteur de courant anodique de deux cellules élémentaires adjacentes, et en ce que
∘ le substrat collecteur de courant cathodique est le substrat collecteur de courant cathodique de deux cellules élémentaires adjacentes,
   ladite au moins cellule élémentaire ou lesdites cellules élémentaires définissent un empilement,
   ledit empilement et ladite batterie présentant six faces, à savoir
   - deux faces dites frontales mutuellement opposées, en particulier mutuellement parallèles, globalement parallèles au(x) substrat(s) collecteur de courant anodique, au(x) couche(s) d'anode, au(x) couche(s) d'un matériau d'électrolyte ou au(x) couche(s) de séparateur imprégné d'un électrolyte, au(x) couche(s) de cathode, et au(x) substrat(s) collecteur de courant cathodique,
   - deux faces dites latérales mutuellement opposées, en particulier mutuellement parallèles,
   - et deux faces dites longitudinales, mutuellement opposées, en particulier mutuellement parallèles,
      étant entendu que la première face longitudinale de la batterie comprend au moins une zone de connexion anodique et qu'une seconde face longitudinale de la batterie comprend au moins une zone de connexion cathodique, lesdites zones de connexion anodique et cathodique étant latéralement opposées,
      caractérisée en ce que
   - selon un premier sens longitudinal de la batterie, chaque substrat collecteur de courant anodique fait saillie par rapport à la fois à chaque couche d'anode, à chaque couche de matériau d'électrolyte ou couche de séparateur imprégné d'un électrolyte, à chaque couche de cathode ainsi qu'à chaque couche de substrat collecteur de courant cathodique, et
   - selon un second sens longitudinal de la batterie, opposé audit premier sens longitudinal, chaque substrat collecteur de courant cathodique fait saillie par rapport à la fois à chaque couche d'anode, à chaque couche de matériau d'électrolyte ou couche de séparateur imprégné d'un électrolyte, à chaque couche de cathode ainsi qu'à chaque couche de substrat collecteur de courant anodique.

Dans un mode de réalisation particulier :
- chaque substrat collecteur de courant anodique fait saillie par rapport à un premier plan d'extrémité, ce premier plan étant défini par les premières extrémités longitudinales de chaque couche d'anode, de chaque couche de matériau d'électrolyte ou couche de séparateur, de chaque couche de cathode ainsi que de chaque couche de substrat collecteur de courant cathodique, et/ou
- chaque substrat collecteur de courant cathodique fait saillie par rapport à un second plan d'extrémité, ce second plan étant défini par les secondes extrémités longitudinales de chaque couche d'anode, de chaque couche de matériau d'électrolyte ou couche de séparateur, de chaque couche de cathode ainsi que de chaque couche de substrat collecteur de courant anodique.

Selon un autre aspect de l'invention, la batterie selon l'invention comprend un système d'encapsulation recouvrant au moins en partie la périphérie extérieure de l'empilement, ledit système d'encapsulation recouvrant les faces frontales de l'empilement, les faces latérales et au moins en partie les faces longitudinales, de sorte que
- seul chaque chant anodique de chaque substrat collecteur de courant anodique faisant saillie par rapport à la fois à chaque couche d'anode, à chaque couche de matériau d'électrolyte ou couche de séparateur, à chaque couche de cathode ainsi qu'à chaque couche de substrat collecteur de courant cathodique selon le premier sens longitudinal de la batterie, affleure une première face longitudinale, et que
- seul chaque chant cathodique de chaque substrat collecteur de courant cathodique faisant saillie par rapport à la fois à chaque couche d'anode, à chaque couche de matériau d'électrolyte ou couche de séparateur, à chaque couche de cathode ainsi qu'à chaque couche de substrat collecteur de courant anodique selon le second sens longitudinal de la batterie, affleure une seconde face longitudinale, ladite seconde face longitudinale étant de préférence opposée et parallèle à la première face longitudinale,
   étant entendu que chaque chant anodique définit une zone de connexion anodique et que chaque chant cathodique définit une zone de connexion cathodique.

Selon encore un autre aspect de l'invention, le système d'encapsulation comprend:
- optionnellement, une première couche de recouvrement, de préférence choisie parmi le parylène, le parylène de type F, le polyimide, les résines époxy, le silicone, le polyamide, la silice sol-gel, la silice organique et/ou un mélange de ceux-ci, déposée sur au moins en partie la périphérie extérieure de l'empilement,
- optionnellement une deuxième couche de recouvrement composée d'une matière électriquement isolante déposée par dépôt de couches atomiques, sur au moins en partie la périphérie extérieure de l'empilement, ou sur la première couche de recouvrement,
- au moins une troisième couche de recouvrement étanche, de préférence ayant une perméance à la vapeur d'eau (WVTR) inférieure à 10⁻⁵ g/m².d, cette troisième couche de recouvrement étant composée d'un matériau céramique et/ou d'un verre à bas point de fusion, de préférence d'un verre dont le point de fusion est inférieur à 600°C, déposée sur au moins en partie la périphérie extérieure de l'empilement, ou sur la première couche de recouvrement,
   étant entendu que lorsque ladite deuxième couche de recouvrement est présente,
- une succession de ladite deuxième couche de recouvrement et de ladite troisième couche de recouvrement peut être répétée z fois avec z ≥ 1 et déposée à la périphérie externe d'au moins la troisième couche de recouvrement, et
- la dernière couche du système d'encapsulation étant une couche de recouvrement étanche, de préférence ayant une perméance à la vapeur d'eau (WVTR) inférieure à 10⁻⁵ g/m².d et étant composée d'un matériau céramique et/ou d'un verre à bas point de fusion.

Selon encore un autre aspect de l'invention au moins la zone de connexion anodique, de préférence la première face longitudinale comprenant au moins la zone de connexion anodique, est recouverte par un organe de contact anodique, et au moins la zone de connexion cathodique, de préférence la seconde face longitudinale comprenant au moins la zone de connexion cathodique, est recouverte par un organe de contact cathodique, étant entendu que lesdits organes de contact anodique et cathodique sont aptes à assurer le contact électrique entre l'empilement et un élément conducteur externe.

Selon encore un autre aspect de l'invention, chacun des organes de contact anodique et cathodique comprend :
- une première couche de connexion électrique, disposée sur au moins la zone de connexion anodique et au moins la zone de connexion cathodique, de préférence sur la première face longitudinale comprenant au moins la zone de connexion cathodique et sur la seconde face longitudinale comprenant au moins la zone de connexion cathodique,
   cette première couche comprenant un matériau chargé en particules électriquement conductrices, de préférence une résine polymérique et/ou un matériau obtenu par un procédé sol-gel, chargé en particules électriquement conductrices et encore plus préférentiellement une résine polymérique chargée en graphite,
- une deuxième couche de connexion électrique comprenant une feuille métallique disposée sur la première couche de matériau chargé en particules électriquement conductrices.

Selon encore un autre aspect de l'invention, la plus petite distance entre la première face longitudinale comprenant au moins une zone de connexion anodique et le premier plan d'extrémité défini par les premières extrémités longitudinales de chaque couche d'anode, de chaque couche de matériau d'électrolyte et/ou couche de séparateur, de chaque couche de cathode ainsi que de chaque couche de substrat collecteur de courant cathodique est comprise entre 0,01 mm et 0,5 mm, et/ou
la plus petite distance entre la seconde face longitudinale comprenant au moins une zone de connexion cathodique et le second plan d'extrémité défini par les secondes extrémités longitudinales de chaque couche d'anode, de chaque couche de matériau d'électrolyte et/ou couche de séparateur, de chaque couche de cathode ainsi que de chaque couche de substrat collecteur de courant anodique, est comprise entre 0,01 mm et 0,5 mm.

Un autre objet de l'invention est un procédé de fabrication d'au moins une batterie, chaque batterie comprenant au moins une cellule élémentaire,
chaque cellule élémentaire comprend successivement un substrat collecteur de courant anodique, une couche d'anode, au moins une couche d'un matériau d'électrolyte et/ou au moins une couche d'un séparateur imprégné d'un électrolyte, une couche de cathode, et un substrat collecteur de courant cathodique,
sachant que dans le cas où ladite batterie comprend une pluralité de cellules élémentaires, lesdites cellules élémentaires sont disposées les unes au-dessous des autres, à savoir superposées selon une direction frontale au plan principal de la batterie, de sorte que, de préférence :
∘ le substrat collecteur de courant anodique est le substrat collecteur de courant anodique de deux cellules élémentaires adjacentes, et en ce que
∘ le substrat collecteur de courant cathodique est le substrat collecteur de courant cathodique de deux cellules élémentaires adjacentes,
   ladite au moins cellule élémentaire ou lesdites cellules élémentaires définissent un empilement,
   ledit empilement et ladite batterie présentant six faces, à savoir,
   - deux faces dites frontales mutuellement opposées, en particulier mutuellement parallèles, globalement parallèles au(x) substrat(s) collecteur de courant anodique, au(x) couche(s) d'anode, au(x) couche(s) d'un matériau d'électrolyte ou au(x) couche(s) de séparateur imprégné d'un électrolyte, au(x) couche(s) de cathode, et au(x) substrat(s) collecteur de courant cathodique,
   - deux faces dites latérales mutuellement opposées, en particulier mutuellement parallèles,
   - et deux faces dites longitudinales, mutuellement opposées, en particulier mutuellement parallèles,
      étant entendu que la première face longitudinale de la batterie comprend au moins une zone de connexion anodique et qu'une seconde face longitudinale de la batterie comprend au moins une zone de connexion cathodique, lesdites zones de connexion anodique et cathodique étant latéralement opposées,
      de sorte que
   - selon un premier sens longitudinal de la batterie, chaque substrat collecteur de courant anodique fait saillie par rapport à la fois à chaque couche d'anode, à chaque couche de matériau d'électrolyte ou couche de séparateur imprégné d'un électrolyte , à chaque couche de cathode ainsi qu'à chaque couche de substrat collecteur de courant cathodique, et
   - selon un second sens longitudinal de la batterie, opposé audit premier sens longitudinal, chaque substrat collecteur de courant cathodique fait saillie par rapport à la fois à chaque couche d'anode, à chaque couche de matériau d'électrolyte ou couche de séparateur imprégné d'un électrolyte , à chaque couche de cathode ainsi qu'à chaque couche de substrat collecteur de courant anodique,
   ledit procédé de fabrication comprenant :
   une première étape d'approvisionnement d'au moins une feuille de substrat collecteur de courant anodique présentant des fentes, des zones non revêtues et des zones revêtues d'une couche d'anode, optionnellement revêtue d'une couche d'un matériau d'électrolyte ou d'une couche de séparateur, appelée ci-après feuille anodique,
   une deuxième étape d'approvisionnement d'au moins une feuille de substrat collecteur de courant cathodique présentant des fentes, des zones non revêtues et des zones revêtues d'une couche de cathode, optionnellement revêtue d'une couche d'un matériau d'électrolyte ou d'une couche de séparateur, appelée ci-après feuille cathodique,
   une troisième étape de réalisation d'un empilement alterné d'au moins une feuille anodique présentant des fentes, des zones non revêtues et des zones revêtues et d'au moins une feuille cathodique présentant des fentes, des zones non revêtues et des zones revêtues, de manière à obtenir au moins une cellule élémentaire comprenant successivement un substrat collecteur de courant anodique, une couche d'anode, au moins une couche d'un matériau d'électrolyte ou d'un séparateur, une couche de cathode, et un substrat collecteur de courant cathodique, et
   de manière à ce que
∘ selon le premier sens longitudinal de la batterie, chaque substrat collecteur de courant anodique fait saillie par rapport à la fois à chaque couche d'anode, à chaque couche de matériau d'électrolyte et/ou couche de séparateur, à chaque couche de cathode ainsi qu'à chaque couche de substrat collecteur de courant cathodique, et
∘ selon le second sens longitudinal de la batterie, opposé audit premier sens longitudinal, chaque substrat collecteur de courant cathodique fait saillie par rapport à la fois à chaque couche d'anode, à chaque couche de matériau d'électrolyte et/ou couche de séparateur, à chaque couche de cathode ainsi qu'à chaque couche de substrat collecteur de courant anodique,
   une quatrième étape de réalisation d'un traitement thermique et/ou d'une compression mécanique de l'empilement de feuilles alternées obtenu à la troisième étape, de manière à former un empilement consolidé,
   optionnellement, une cinquième étape de réalisation d'une première paire de découpes permettant de séparer une ligne de batteries donnée vis-à-vis d'au moins une autre ligne de batteries formée à partir dudit empilement consolidé,
   optionnellement une sixième étape d'imprégnation de l'empilement consolidé obtenu à la quatrième étape ou l'imprégnation de la ligne de batteries obtenue à la cinquième étape lorsque cette cinquième étape est réalisée, par une phase porteuse d'ions de lithium telle que des électrolytes liquides ou un liquide ionique contenant des sels de lithium, de sorte que ladite couche de séparateur soit imprégnée par un électrolyte,
   optionnellement une septième étape de réalisation d'une seconde paire de découpes permettant de mettre à nu
   - le chant anodique de chaque substrat collecteur de courant anodique faisant saillie par rapport à la fois à chaque couche d'anode, à chaque couche de matériau d'électrolyte ou couche de séparateur, à chaque couche de cathode ainsi qu'à chaque couche de substrat collecteur de courant cathodique selon le premier sens longitudinal de la batterie, chaque chant anodique définissant au moins une zone de connexion anodique, et
   - le chant cathodique de chaque substrat collecteur de courant cathodique faisant saillie par rapport à la fois à chaque couche d'anode, à chaque couche de matériau d'électrolyte ou couche de séparateur, à chaque couche de cathode ainsi qu'à chaque couche de substrat collecteur de courant anodique selon le second sens longitudinal de la batterie, chaque chant cathodique définissant au moins une zone de connexion cathodique,
   ladite seconde paire de découpes permettant, lorsque ladite cinquième étape est réalisée, de séparer une batterie donnée vis-à-vis d'au moins une autre batterie formée à partir de la ligne de batteries.

Dans un mode de réalisation particulier de ce procédé, on réalise, après la sixième étape (si elle est réalisée), ou si la sixième étape n'est pas réalisée, après la cinquième étape (si elle est réalisée), ou si la sixième étape et la cinquième étape ne sont pas réalisées, après la quatrième étape, et avant la septième étape, une huitième étape d'encapsulation de l'empilement consolidé ou de la ligne de batteries, de préférence, dans laquelle on recouvre, par un système d'encapsulation, au moins en partie la périphérie extérieure de l'empilement ou de la ligne de batteries, de préférence, les faces frontales de l'empilement ou de la ligne de batteries, les faces latérales et au moins en partie les faces longitudinales de sorte que
∘ seul chaque chant anodique de chaque substrat collecteur de courant anodique faisant saillie par rapport à la fois à chaque couche d'anode, à chaque couche de matériau d'électrolyte ou couche de séparateur, à chaque couche de cathode ainsi qu'à chaque couche de substrat collecteur de courant cathodique selon le premier sens longitudinal de la batterie, affleure une première face longitudinale, et que
∘ seul chaque chant cathodique de chaque substrat collecteur de courant cathodique faisant saillie par rapport à la fois à chaque couche d'anode, à chaque couche de matériau d'électrolyte ou couche de séparateur, à chaque couche de cathode ainsi qu'à chaque couche de substrat collecteur de courant anodique selon le second sens longitudinal de la batterie, affleure une seconde face longitudinale, ladite seconde face longitudinale étant de préférence opposée et parallèle à la première face longitudinale,
   étant entendu que chaque chant anodique définit une zone de connexion anodique et que chaque chant cathodique définit une zone de connexion cathodique ;
   ledit système d'encapsulation comprenant, de préférence,
   - optionnellement, au moins une première couche de recouvrement, de préférence choisie parmi le parylène, le parylène de type F, le polyimide, les résines époxy, le silicone, le polyamide, la silice sol-gel, la silice organique et/ou un mélange de ceux-ci, déposée sur au moins en partie la périphérie extérieure de l'empilement ou de la ligne de batteries,
   - optionnellement une deuxième couche de recouvrement composée d'une matière électriquement isolante déposée par dépôt de couches atomiques,
   - sur au moins en partie la périphérie extérieure de l'empilement ou de la ligne de batteries,
   - ou sur la première couche de recouvrement, et
   - au moins une troisième couche de recouvrement étanche, de préférence ayant une perméance à la vapeur d'eau (WVTR) inférieure à 10⁻⁵ g/m².d, cette troisième couche de recouvrement étant composée d'un matériau céramique et/ou d'un verre à bas point de fusion, de préférence d'un verre dont le point de fusion est inférieur à 600°C, déposée sur au moins en partie la périphérie extérieure de l'empilement ou de la ligne de batteries, ou de la première couche de recouvrement,
   étant entendu qu'une séquence d'au moins une deuxième couche de recouvrement et d'au moins une troisième couche de recouvrement peut être répétée z fois avec z ≥ 1 et déposée à la périphérie externe d'au moins la troisième couche de recouvrement, et que la dernière couche du système d'encapsulation est une couche de recouvrement étanche, de préférence ayant une perméance à la vapeur d'eau (WVTR) inférieure à 10⁻⁵ g/m².d et étant composée d'un matériau céramique et/ou d'un verre à bas point de fusion.

Dans un autre mode de réalisation particulier de du procédé selon l'invention, qui peut être combiné avec le précédent, après la septième étape, on recouvre au moins la zone de connexion anodique, de préférence au moins la première face longitudinale comprenant au moins la zone de connexion anodique, par un organe de contact anodique, apte à assurer le contact électrique entre l'empilement et un élément conducteur externe,
et on recouvre au moins la zone de connexion cathodique, de préférence au moins la seconde face longitudinale comprenant au moins la zone de connexion cathodique, par un organe de contact cathodique, apte à assurer le contact électrique entre l'empilement et un élément conducteur externe,
ladite réalisation d'organes de contact anodique et cathodique comprenant :
- le dépôt sur au moins la zone de connexion anodique et sur au moins la zone de connexion cathodique, de préférence, sur au moins la première face longitudinale comprenant au moins la zone de connexion anodique, et sur au moins la seconde face longitudinale comprenant au moins la zone de connexion cathodique, d'une première couche de connexion électrique de matériau chargé en particules électriquement conductrices, ladite première couche étant de préférence formée de résine polymérique et/ou d'un matériau obtenu par un procédé sol-gel chargé en particules électriquement conductrices,
- optionnellement, lorsque ladite première couche est formée de résine polymérique et/ou d'un matériau obtenu par un procédé sol-gel chargé en particules électriquement conductrices, une étape de séchage suivie d'une étape de polymérisation de ladite résine polymérique et/ou dudit matériau obtenu par un procédé sol-gel, et
- le dépôt, sur la première couche, d'une deuxième couche de connexion électrique comprenant une feuille métallique disposée sur la première couche de connexion électrique,
- optionnellement, le dépôt sur la deuxième couche de connexion électrique, d'une troisième couche de connexion électrique comprenant une encre conductrice.

### Figures

Les figures annexées, données à titre d'exemples non limitatifs, représentent différents aspects et modes de réalisation de l'invention.
[Fig. 1] est une vue en perspective des feuilles anodique et cathodique destinées à former un empilement selon le procédé de fabrication de batteries conforme à l'invention, ces feuilles anodique et cathodique présentant des entités élémentaires comprenant des zones non revêtues, des zones revêtues, et des fentes.
[Fig. 2] est une vue de face, illustrant l'une des feuilles, notamment une feuille anodique de la figure 1.
[Fig. 3] est une vue de face, à plus grande échelle, illustrant une entité élémentaire, constituée d'une zone non revêtue désignée ci-après par le terme « épargne », d'une zone revêtue, et d'une fente, prévue dans une feuille anodique selon l'invention ou selon une variante de l'invention.
[Fig. 4] est une vue en perspective, également à grande échelle, illustrant les zones non revêtues ou épargnes, les zones revêtues et les fentes de ces entités élémentaires prévues dans des feuilles adjacentes.
[Fig. 5] est une vue de dessus, illustrant une étape de découpe réalisée sur différentes entités élémentaires prévues dans l'empilement des figures précédentes.
[Fig. 6] est une vue de dessus, illustrant à plus grande échelle les découpes réalisées sur les entités élémentaires.
[Fig. 7] est une vue en coupe, selon la ligne de coupe VII-VII indiquée sur la figure 6 illustrant l'empilement des entités élémentaires anodique et cathodique selon l'invention ou selon une variante de l'invention, chacune de ces entités élémentaires étant constituées d'une zone non revêtue, d'une zone revêtue et d'une fente.
[Fig. 8] est une vue en coupe, selon la ligne de coupe VII-VII indiquée sur la figure 6 illustrant l'empilement des entités élémentaires encapsulé dans un système d'encapsulation.
[Fig. 9] est une vue en coupe, selon la ligne de coupe VII-VII illustrant une batterie conforme à l'invention comprenant un système d'encapsulation, qui est susceptible d'être obtenue notamment selon le procédé des figures précédentes.
[Fig. 10] est une vue en perspective illustrant une batterie conforme à l'invention comprenant un système d'encapsulation, qui est susceptible d'être obtenue notamment selon le procédé des figures précédentes.
[Fig. 11] est une vue en coupe, selon la ligne de coupe VII-VII illustrant une batterie conforme à l'invention comprenant un système d'encapsulation et des organes de contact, qui est susceptible d'être obtenue notamment selon le procédé des figures précédentes.
[Fig. 12] est une vue en perspective illustrant une batterie selon l'art antérieur.
[Fig. 13] est une vue de face, illustrant l'une des feuilles selon une variante de l'invention, notamment une feuille anodique où les épargnes anodiques sont réalisées sous forme d'une seule bande d'épargne.
[Fig. 14] est une vue de dessus, illustrant une étape de découpe réalisée sur différentes entités élémentaires prévues dans l'empilement selon une variante de l'invention.
[Fig. 15] est une vue de dessus, illustrant une étape de découpe réalisée sur différentes entités élémentaires prévues dans l'empilement selon une variante de l'invention et montrant les batteries obtenues selon cette même variante.
[Fig. 16] est une vue de dessus, illustrant une ligne de batteries selon l'invention.
[Fig. 17] est une vue en perspective illustrant une ligne de batteries conforme à l'invention comprenant un système d'encapsulation, qui est susceptible d'être obtenue notamment selon le procédé des figures précédentes.

Les repères suivants sont utilisés sur ces figures et dans la description qui suit :
- 1000, 1000': Batterie selon l'invention
- 1002: Zone de connexion anodique
- 1002': Chant anodique de chaque substrat collecteur de courant anodique
- 1006: Zone de connexion cathodique
- 1006': Chant cathodique de chaque substrat collecteur de courant cathodique
- 100, 100', 100": Cellule élémentaire
- 10: Substrat collecteur de courant anodique
- 20: Couche d'anode
- 30: Couche d'un matériau d'électrolyte / Couche d'électrolyte
- 31: Couche de séparateur imprégné ou ultérieurement imprégné d'un électrolyte / Couche de séparateur
- 40: Substrat collecteur de courant cathodique
- 50: Couche de cathode
- 60: Entité élémentaire
- 60': Entité élémentaire anodique
- 60": Entité élémentaire cathodique
- 70: Fentes en forme de I dans les feuilles de cathode, fente cathodique
- H₇₀: Hauteur totale de la fente cathodique 70 en forme de I
- L₇₀: Largeur totale de la fente cathodique 70 en forme de I
- 71: Zone revêtue dans la feuille de cathode
- 72: Epargne / Zone non revêtue dans la feuille de cathode / Epargne cathodique
- L₇₂: Largeur totale de l'épargne / de la zone non revêtue 72 dans la feuille de cathode
- H₇₂: Hauteur totale de l'épargne / de la zone non revêtue 72 dans la feuille de cathode
- L₇₁: Largeur totale de la zone revêtue dans la feuille de cathode
- 80: Fentes en forme de I dans les feuilles d'anode, fente anodique
- H₈₀: Hauteur totale de la fente anodique 80 en forme de I
- L₈₀: Largeur totale de la fente anodique 80 en forme de I
- 81: Zone revêtue dans la feuille d'anode
- 82: Epargne / Zone non revêtue dans la feuille d'anode / Epargne anodique
- 82': Bande d'épargnes
- L₈₁: Largeur totale de la zone revêtue dans la feuille d'anode
- H₈₁: Hauteur totale de la zone revêtue dans la feuille d'anode
- L₈₂: Largeur totale de l'épargne / de la zone non revêtue 82
- H₈₂: Hauteur totale de l'épargne / de la zone non revêtue 82
- 90: Chutes de matière
- 95: Système d'encapsulation
- 97: Organe de contact
- 97': Organe de contact anodique
- 97'a: Ergot d'organe de contact anodique recouvrant les extrémités des faces adjacentes F1,F2,F3,F5 à la face longitudinale F6
- 97": Organe de contact cathodique
- 97"a: Ergot d'organe de contact cathodique recouvrant les extrémités des faces adjacentes F1,F2,F3,F5 à la face longitudinale F4
- Dca: Plus petite distance entre la première face longitudinale (F6) d'une batterie 1000 comprenant au moins une zone de connexion anodique (1002) et le premier plan d'extrémité DYₐ
- Dcc: Plus petite distance entre la seconde face longitudinale (F4) d'une batterie 1000 comprenant au moins une zone de connexion cathodique(1006) et le second plan d'extrémité DY'ₐ
- Dca': Plus petite distance entre la première face longitudinale d'une batterie 1000' comprenant au moins une zone de connexion anodique et le premier plan d'extrémité défini par les premières extrémités longitudinales de chaque couche d'anode, de chaque couche de matériau d'électrolyte ou couche de séparateur, de chaque couche de cathode ainsi que de chaque couche de substrat collecteur de courant cathodique
- Dcc': Plus petite distance entre la seconde face longitudinale d'une batterie 1000' comprenant au moins une zone de connexion cathodique et le second plan d'extrémité défini par les premières extrémités longitudinales de chaque couche d'anode, de chaque couche de matériau d'électrolyte ou couche de séparateur, de chaque couche de cathode ainsi que de chaque couche de substrat collecteur de courant anodique
- I₁₀₀₀: Largeur de la batterie
- L₁₀₀₀: Longueur de la batterie
- C₁₀₀₀: Centre de la batterie 1000
- Z₁₀₀₀: Axe parallèle à la direction frontale ZZ de la batterie et passant par le centre C₁₀₀₀ de la batterie 1000.
- R₁₀₀₀: Rotation de la batterie 1000 autour de Z₁₀₀₀
- I: Empilement de feuilles de substrat, recouverte d'une couche d'électrode (anode ou cathode) et d'une feuille d'électrolyte ou d'une feuille de séparateur imprégné ou ultérieurement imprégné d'un électrolyte / Empilement d'au moins une cellule élémentaire
- 2e: Feuille anodique présentant des entités élémentaires
- 5e: Feuille cathodique présentant des entités élémentaires
- 4: Zone centrale perforée de la feuille anodique présentant des entités élémentaires
- 6: Cadre périphérique de la feuille anodique présentant des entités élémentaires
- 7: Perforations présentes aux quatre extrémités des feuilles de substrat, d'anode, de cathode, d'électrolyte ou de séparateur imprégné ou ultérieurement imprégné d'un électrolyte
- 8: Ponts de matière entre deux lignes
- H₈: Hauteur des ponts
- 9: Bandes de matières entre deux rangées
- L₉: Largeur des bandes
- XX: Direction longitudinale ou horizontale de l'empilement / de la batterie
- YY: Direction latérale ou transversale de l'empilement / de la batterie
- ZZ: Direction frontale de l'empilement / de la batterie
- L, Lₙ, Lₙ₋₁, Lₙ₊₁: Ligne des entités élémentaires / Ligne de batteries
- R, Rₙ, Rₙ₋₁, Rₙ₊₁: Rangée des entités élémentaires
- DYₙ₋₁, DY'ₙ₋₁, DYₙ, DY'ₙ, DYₙ₊₁, DY'ₙ₊₁: Découpes
- DXₙ₋₁, DX'ₙ₋₁, DXₙ, DX'ₙ, DXₙ₊₁, DX'ₙ₊₁: Découpes
- DYa: Premier plan d'extrémité d'une batterie défini par les premières extrémités longitudinales de chaque couche d'anode, de chaque couche de matériau d'électrolyte ou couche de séparateur, de chaque couche de cathode ainsi que de chaque couche de substrat collecteur de courant cathodique.
- DY'a: Second plan d'extrémité d'une batterie défini par les secondes extrémités longitudinales de chaque couche d'anode, de chaque couche de matériau d'électrolyte ou couche de séparateur, de chaque couche de cathode ainsi que de chaque couche de substrat collecteur de courant anodique
- 2000: Batterie selon l'art antérieur
- 200, 200', 200": Cellule élémentaire d'une batterie selon l'art antérieur
- 2002: Zone de connexion anodique d'une batterie selon l'art antérieur
- 2006: Zone de connexion cathodique d'une batterie selon l'art antérieur
- 295: Système d'encapsulation d'une batterie selon l'art antérieur
- YH: Axe médian latéral des entités élémentaires
- F1, F2: Faces frontales de l'empilement (I) / de la batterie (1000)
- F3, F5: Faces latérales de l'empilement (I) / de la batterie (1000)
- F4, F6: Faces longitudinales de l'empilement (I) / de la batterie (1000)
- FF1, FF2: Faces frontales de la ligne de batteries (Lₙ)
- FF3, FF5: Faces latérales de la ligne de batteries (Lₙ)
- FF4, FF6: Faces latérales de la ligne de batteries (Lₙ)

### Description de l'invention

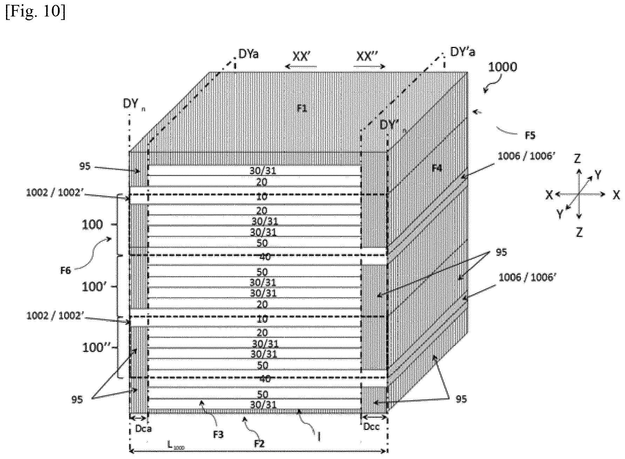

On associe à cette batterie, par convention, les dénominations géométriques suivantes : ZZ la direction dénommée frontale, à savoir perpendiculaire au plan des différentes couches empilées ;
XX la direction dénommée longitudinale, laquelle est incluse dans le plan des couches empilées et laquelle est parallèle à la plus grande dimension de ces couches, en vue de dessus, à savoir selon la direction frontale ;
YY la direction dénommée latérale ou transversale, laquelle est incluse dans le plan des couches empilées et laquelle est parallèle à la plus petite dimension de ces couches, en vue de dessus.
Par convention également, les deux sens associés à chaque qu'une de ces trois directions sont données en référence au plan de la feuille sur laquelle est reproduite la figure 10.
Pour la direction XX, on associe donc le sens vers la droite et le sens vers la gauche, pour la direction YY, on associe le sens vers l'avant et le sens vers l'arrière, et pour la direction ZZ, on associe le sens vers le haut et le sens vers le bas, en référence au plan de la feuille sur laquelle est reproduite la figure 10.
Par convention également, on définit un premier sens longitudinal **XX'** dirigé de droite à gauche et un second sens longitudinal **XX",** opposé au premier sens longitudinal **XX',** à savoir dirigé de gauche à droite, en référence au plan de la feuille sur laquelle est reproduite la figure 10. On définit, toujours en référence au plan de la feuille sur laquelle est reproduite la figure 10, un premier sens latéral **YY'** dirigé de l'avant vers l'arrière, un second sens latéral **YY",** opposé au premier sens latéral, un premier sens frontal **ZZ'** dirigé du haut vers le bas, ainsi qu'un second sens frontal **ZZ",** opposé au premier sens frontal.

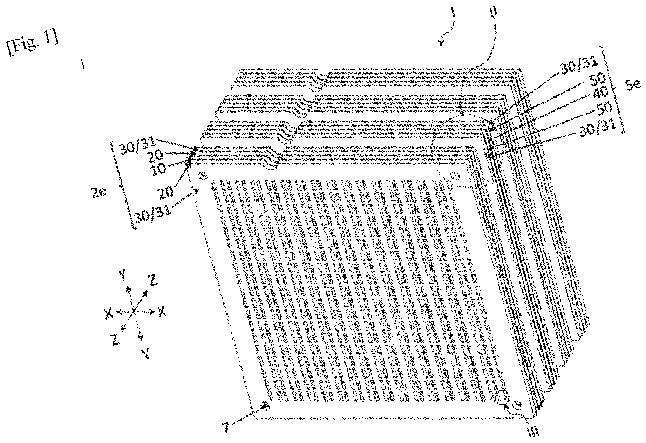

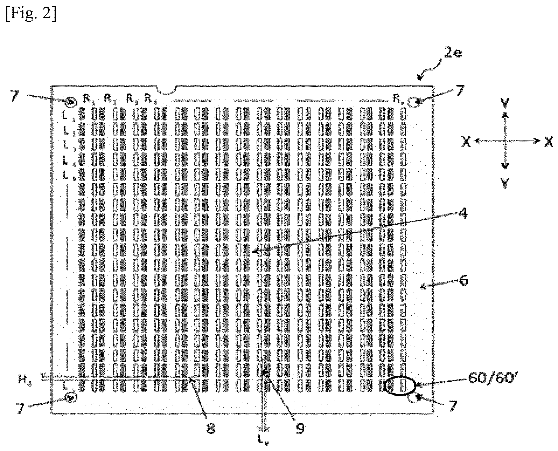

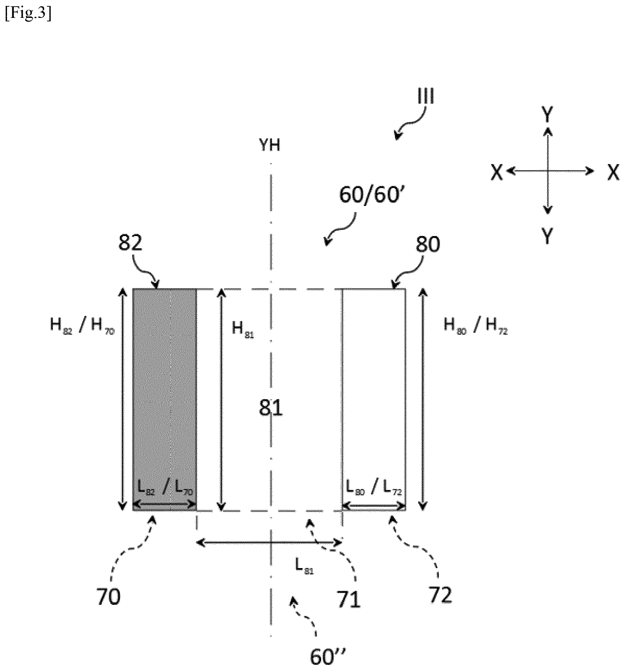

Le procédé conforme à l'invention comprend tout d'abord une étape dans laquelle on réalise un empilement **I** de feuilles alternées, ces feuilles étant dénommées dans ce qui suit, selon le cas, « feuilles anodiques » ou « feuilles cathodiques ». Comme on le verra plus en détail, chaque feuille anodique est destinée à former l'anode de plusieurs batteries, et chaque feuille cathodique est destinée à former la cathode de plusieurs batteries. Dans l'exemple illustré sur la figure 1, on a représenté deux feuilles cathodiques présentant des entités élémentaires **5e,** ainsi que deux feuilles anodiques présentant des entités élémentaires **2e.** En pratique, cet empilement est formé par un nombre plus élevé de feuilles, typiquement compris entre dix et mille. Le nombre de feuilles cathodiques présentant des entités élémentaires **5e** est identique au nombre de feuilles anodiques présentant des entités élémentaires **2e** employées constituant l'empilement **I** de feuilles alternées de polarité opposée.
Dans un mode de réalisation avantageux, chacune de ces feuilles présente des perforations **7** à ses quatre extrémités de manière à ce que lorsque ces perforations **7** sont superposées, toutes les cathodes et toutes les anodes de ces feuilles sont agencées selon l'invention, comme cela sera expliqué en plus grand détail ci-après (cf. figures 1, 2 et 3). Ces perforations **7** aux quatre extrémités des feuilles peuvent être réalisées par tout moyen approprié, notamment sur des feuilles anodique et cathodique après fabrication, ou sur des feuilles de substrat **10,40** avant fabrication des feuilles anodique et cathodique. Chaque feuille anodique comprend un substrat collecteur de courant anodique **10** revêtu au moins partiellement d'une couche active **20** d'un matériau d'anode, ci-après couche d'anode **20.** Chaque feuille cathodique comprend un substrat collecteur de courant cathodique **40** revêtu au moins partiellement d'une couche active **50** d'un matériau de cathode, dénommée ci-après couche de cathode **50.** Chacune de ces couches actives peut être solide, et plus particulièrement de nature dense ou poreuse. Par ailleurs, afin d'éviter tout contact électrique entre deux couches actives de polarités opposées, une couche d'électrolyte **30** ou une couche de séparateur **31** ultérieurement imprégné d'un électrolyte est disposée sur la couche active d'au moins l'un de ces substrats collecteurs de courant préalablement revêtu de la couche active, au contact de la couche active en regard. La couche d'électrolyte **30** ou la couche de séparateur **31,** peut être disposée sur la couche d'anode **20** et/ou sur la couche de cathode **50;** la couche d'électrolyte **30** ou la couche de séparateur **31** fait partie intégrante de la feuille anodique et/ou de la feuille cathodique la ou le comprenant.
Avantageusement, les deux faces du substrat collecteur de courant anodique **10,** respectivement cathodique **40,** sont revêtues au moins partiellement d'une couche d'anode **20,** respectivement d'une couche de cathode **50,** et optionnellement d'une couche d'électrolyte **30** ou d'une couche de séparateur **31,** disposée sur la couche d'anode **20,** respectivement sur la couche de cathode **50.** Dans ce cas, le substrat collecteur de courant anodique **10,** respectivement cathodique **40,** sert de collecteur de courant pour deux cellules élémentaires adjacentes **100, 100'.** L'utilisation de ces substrats dans les batteries permet d'accroître le rendement de production des batteries rechargeables à forte densité d'énergie et forte densité de puissance.
La structure mécanique de l'une des feuilles anodiques est décrite ci-après, étant entendu que les autres feuilles anodiques présentent une structure identique. Par ailleurs, comme on le verra dans ce qui suit, les feuilles cathodiques possèdent une structure voisine de celle des feuilles anodiques.
Comme cela est visible sur la figure 2, la feuille anodique **2e** présentant des entités élémentaires **60, 60'** a une forme de quadrilatère, sensiblement de type carré. Elle délimite une zone centrale **4** dite perforée, dans laquelle sont prévues des entités élémentaires qui vont être décrites ci-après. En référence au positionnement de ces entités élémentaires, on définit une direction dite latérale ou transversale **YY** de la feuille, qui correspond à la direction latérale de ces entités élémentaires, ainsi qu'une direction dite horizontale **XX** de la feuille, perpendiculaire à la direction **YY.** La zone centrale **4** est bordée par un cadre périphérique **6** qui est plein, à savoir dépourvu d'entités élémentaires. La fonction de ce cadre est notamment d'assurer une manipulation aisée de chaque feuille.
Les entités élémentaires **60, 60'** sont réparties selon des lignes **L₁** à **L_{y}**, disposées les unes au-dessous des autres, ainsi que selon des rangées **R₁** à **Rₓ** prévues les unes à côté des autres. A titre d'exemples non limitatifs, dans le cadre de la fabrication de microbatteries de type composant montable en surface (ci-après CMS), les feuilles anodiques et cathodiques employées peuvent être des plaques de 100 mm x 100 mm. De manière typique, le nombre de lignes de ces feuilles est compris entre 10 et 500, alors que le nombre de rangées est compris entre 10 et 500. En fonction de la capacité souhaitée de la batterie, ses dimensions peuvent varier et le nombre de lignes et de rangées par feuilles d'anode et de cathode peut être adapté en conséquence. Les dimensions des feuilles anodique et cathodique employées peuvent être modulées en fonction des besoins. Comme montré en figure 2, deux lignes adjacentes peuvent être séparées par des ponts de matière **8,** dont on note **H₈** la hauteur, laquelle est comprise entre 0,05 mm et 5 mm. Deux rangées adjacentes peuvent être séparées par des bandes de matières **9,** dont on note **L₉** la largeur, laquelle est comprise entre 0,05 mm et 5 mm. Ces ponts **8** et bandes **9** de matière des feuilles anodiques et cathodiques confèrent à ces feuilles une rigidité mécanique suffisante pour qu'elles puissent être manipulées aisément.
Les entités élémentaires **60,60',60"** comprennent des épargnes, i.e. des zones non revêtues **72,82,** des zones revêtues **71,81,** et des fentes **70,80** comme on le verra plus en détail, ci-après. Ces fentes **70,80,** de préférence en forme de I sont traversantes, à savoir qu'elles débouchent sur les faces opposées respectivement supérieures et inférieures de la feuille. Ces fentes **70,80** ont, de préférence, une forme de quadrilatère, sensiblement de type rectangulaire. Ces fentes **70,80** peuvent être réalisées de manière connue en soi, directement sur le substrat collecteur de courant, avant tout dépôt de matériaux d'anode ou de cathode par gravure chimique, par électroformage, par découpe laser, par microperforation ou par étampage. Ces fentes **70,80** peuvent aussi être réalisées :
- sur des substrats collecteurs de courant au moins partiellement revêtus d'une couche de matériaux d'anode ou de cathode, ou
- sur des substrats collecteurs de courant au moins partiellement revêtus d'une couche de matériaux d'anode ou de cathode, elle-même revêtue d'une couche d'électrolyte ou d'une couche de séparateur, i.e. sur des feuilles d'anode ou de cathode.
Lorsque les fentes **70,80** sont opérées sur de tels substrats au moins partiellement revêtus, les fentes **70,80** peuvent être réalisées de manière connue en soi, par exemple par découpe laser (ou ablation laser), par découpe au laser femtoseconde, par microperforation ou par étampage. Les fentes **70,** réalisées dans l'ensemble des feuilles cathodiques, sont mutuellement superposées. Les fentes **80,** réalisées dans l'ensemble des feuilles anodiques, sont mutuellement superposées.
On va maintenant décrire l'une des entités élémentaires **60** comme illustré en figure 3, étant entendu que l'ensemble des entités élémentaires **60,60'** de la feuille anodique est identique et que l'ensemble des entités élémentaires **60,60"** de la feuille cathodique est identique.
Sur la figure 3 est représentée une entité élémentaire anodique **60,60'.**
Chaque entité élémentaire **60,60',60"** comprend une fente **80,70** traversante, de préférence en forme de I, une épargne, i.e. une zone non revêtue **82,72,** et une zone revêtue **81,71.**

On entend par zone revêtue **81** d'une entité élémentaire anodique **60',** la zone de la feuille anodique qui est recouverte par une couche d'anode **20** ou qui est recouverte par une couche d'anode **20** et une couche d'électrolyte **30** ou une couche de séparateur **31.** On entend par épargne ou zone non revêtue **82** d'une entité élémentaire anodique **60',** la zone de la feuille anodique qui n'est pas recouverte par une couche d'anode **20** ou qui n'est pas recouverte par une couche d'anode **20** et une couche d'électrolyte **30** ou une couche de séparateur **31.**
Les épargnes anodiques **82** sont des zones libres de tout matériau d'électrolyte ou de séparateur et de tout matériau d'anode. Lors de leur réalisation sur les feuilles anodiques, ces épargnes anodiques **82** sont effectuées de manière à enlever ou à éviter le dépôt de tout matériau d'électrolyte ou de séparateur, de tout matériau d'anode, et à laisser au moins une partie du substrat collecteur de courant anodique **10.** De sorte que, selon un premier sens longitudinal **XX'** de la batterie, chaque substrat collecteur de courant anodique **10** fait saillie par rapport à la fois à chaque couche d'anode **20,** à chaque couche de matériau d'électrolyte **30** ou couche de séparateur imprégné d'un électrolyte **31.** Lorsque les substrats collecteur de courant sont intégralement recouverts d'une couche d'anode **20,** elle-même **20** éventuellement recouverte d'une couche d'électrolyte **30** ou d'une couche de séparateur **31,** les épargnes anodiques **82** peuvent être réalisées par ablation laser afin d'enlever localement la couche d'anode **20** ou la couche d'anode **20** revêtue d'une couche d'électrolyte **30** ou d'une couche de séparateur **31.** Les épargnes anodiques **82** peuvent aussi être réalisées, de manière connue en soi, par enduction locale par slot-die du substrat collecteur de courant. L'enduction locale par slot-die du substrat collecteur de courant permet de réaliser un dépôt local sur le substrat, notamment d'une couche d'anode **20,** éventuellement recouverte ultérieurement selon le même procédé d'une couche d'électrolyte **30** ou d'une couche de séparateur **31.** L'enduction par slot-die sur le substrat avec une symétrie dans le sens de défilement du substrat permet de laisser directement des zones non revêtues **82** sur le substrat ; ceci permet de réduire le nombre d'étape du procédé de fabrication des entités élémentaires sur les feuilles anodiques.
L'épargne **82,72** d'une part, et la fente **80,70** d'une même entité élémentaire **60, 60',60"** d'autre part, sont mutuellement symétriques en vue de dessus, par rapport à l'axe médian des entités élémentaires **60, 60',60",** lequel est noté **YH.**
Chaque épargne anodique **82** est réalisée dans le prolongement de chaque fente cathodique **70** et chaque épargne cathodique **72** est réalisée dans le prolongement de chaque fente anodique **80.**

La feuille anodique obtenue après la réalisation de fentes **80,** de zones revêtues **81** et d'épargnes **82,** est appelée ci-après feuille anodique présentant des entités élémentaires **2e.**
On note :
- **H₈₀** la hauteur de l'ensemble de la fente anodique, qui est typiquement comprise entre 0,25 mm et 10 mm ;
- **L₈₀** sa largeur, qui est typiquement comprise entre 0,25 mm et 10 mm ;
- **H₈₂** la hauteur de chaque épargne anodique, qui est typiquement comprise entre 0,25 mm et 10 mm ;
- **L₈₂** la largeur de chaque épargne anodique, qui est typiquement comprise entre 0,25 mm et 10 mm.

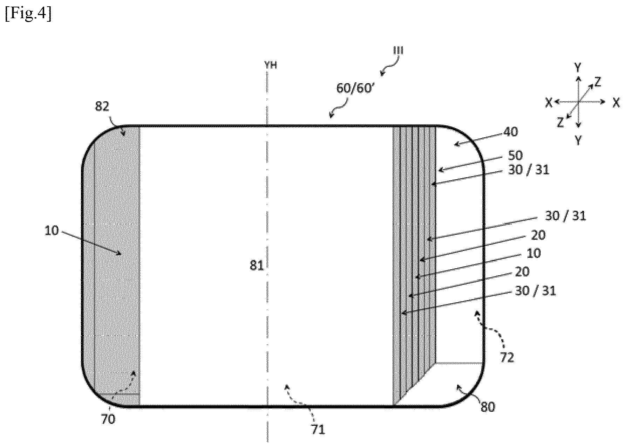

De manière analogue, chaque feuille cathodique est également pourvue de différentes lignes et rangées d'entités élémentaires cathodiques **60,60",** prévues en même nombre que les entités élémentaires anodiques **60, 60'.**
Comme le montre notamment la figure 4, la structure de chaque entité élémentaire cathodique **60"** est sensiblement analogue à celle de chaque entité élémentaire anodique **60',** à savoir que cette entité élémentaire cathodique **60"** comprend une épargne ou zone non revêtue **72,** une zone revêtue **71** et une fente **70.**
On entend par épargne ou zone non revêtue **72** d'une entité élémentaire cathodique **60",** la zone de la feuille cathodique **5e** qui n'est pas recouverte par une couche de cathode **50** ou qui n'est pas recouverte par une couche de cathode **50** et une couche d'électrolyte **30** ou une couche de séparateur **31.**
On entend par zone revêtue **81** d'une entité élémentaire cathodique **60",** la zone de la feuille cathodique **5e** qui est recouverte par une couche de cathode **50** ou qui est recouverte par une couche de cathode **50** et par une couche d'électrolyte **30** ou une couche de séparateur **31.**
Les dimensions des épargnes cathodiques **72** sont identiques à celles des fentes anodiques **80** et, de manière analogue, les dimensions des épargnes anodiques **82** sont analogues à celles des fentes cathodiques **70.**
En vue de dessus, les épargnes cathodiques **72** sont superposées aux fentes anodiques **80** et les épargnes anodiques **82** sont superposées aux fentes cathodiques **70.**
Les seules différences, entre les entités élémentaires anodique **60'** et cathodique **60",** résident dans le fait que d'une part, les épargnes cathodiques **72** et les épargnes anodiques **82** sont mutuellement inversées. D'autre part, les fentes cathodiques **70** et les fentes anodiques **80** sont mutuellement inversées. De la sorte, en vue de dessus, chaque épargne anodique **82** est réalisée dans le prolongement de chaque fente cathodique **70** et que chaque épargne cathodique **72** est réalisée dans le prolongement de chaque fente anodique **80.**
Les épargnes cathodiques **72** sont des zones libres de tout matériau d'électrolyte ou de séparateur et de tout matériau de cathode. Lors de leur réalisation sur les feuilles cathodiques, ces épargnes cathodiques **72** sont effectuées de manière à enlever ou à éviter le dépôt de tout matériau d'électrolyte ou de séparateur, de tout matériau de cathode, et à laisser au moins une partie du substrat collecteur de courant anodique **10.** De la sorte, selon le second sens longitudinal **XX"** de la batterie, opposé au premier sens longitudinal **XX'** chaque substrat collecteur de courant cathodique **40** fait saillie par rapport à la fois à chaque couche de cathode **50,** à chaque couche de matériau d'électrolyte **30** ou couche de séparateur imprégné d'un électrolyte **31.** Lorsque les substrats collecteur de courant sont intégralement recouverts d'une couche de cathode **50,** elle-même **50** éventuellement recouverte d'une couche d'électrolyte **30** ou d'une couche de séparateur **31,** les épargnes cathodiques **72** peuvent être réalisées par ablation laser afin d'enlever localement la couche de cathode **50** ou la couche de cathode **50** revêtue d'une couche d'électrolyte **30** ou d'une couche de séparateur **31.** Les épargnes cathodiques **72** peuvent aussi être réalisées par enduction locale par slot-die du substrat collecteur de courant. L'enduction locale par slot-die du substrat collecteur de courant permet de réaliser un dépôt local sur le substrat, notamment d'une couche de cathode **50,** éventuellement recouverte ultérieurement selon le même procédé d'une couche d'électrolyte **30** ou d'une couche de séparateur **31.** L'enduction par slot-die sur le substrat avec une symétrie dans le sens de défilement du substrat permet de laisser directement des zones non revêtues **72** sur le substrat ; ceci permet de réduire le nombre d'étape du procédé de fabrication des entités élémentaires sur les feuilles cathodiques.
La feuille cathodique obtenue après la réalisation de fentes **70,** de zones revêtues **71** et d'épargnes **72** est appelée ci-après feuille cathodique présentant des entités élémentaires **5e.**

On réalise ensuite un empilement **I** alterné d'au moins une feuille anodique présentant des entités élémentaires **2e** et d'au moins une feuille cathodique présentant des entités élémentaires **5e,** de manière à obtenir au moins une cellule élémentaire, chaque cellule élémentaire comprenant successivement un substrat collecteur de courant anodique **10,** une couche d'anode **20,** une couche d'un matériau d'électrolyte **30** ou une couche d'un séparateur imprégné ou ultérieurement imprégné d'un électrolyte **31,** une couche de cathode **50,** et un substrat collecteur de courant cathodique **40.**
L'empilement **I** comprend un agencement alterné d'au moins une feuille anodique **2e** présentant des fentes **80,** des zones non revêtues **82** et des zones revêtues **81** et d'au moins une feuille cathodique **5e** présentant des fentes **70,** des zones non revêtues **72** et des zones revêtues **71.** On obtient ainsi au moins une cellule élémentaire **100** comprenant successivement un substrat collecteur de courant anodique **10,** une couche d'anode **20,** une couche d'un matériau d'électrolyte **30** et/ou une couche de séparateur **31,** une couche de cathode **50,** et un substrat collecteur de courant cathodique **40.**
Cet empilement **I** est réalisé de sorte que :
- selon le premier sens longitudinal **XX'** de la batterie, chaque substrat collecteur de courant anodique **10** fait saillie par rapport à la fois à chaque couche d'anode **20,** à chaque couche de matériau d'électrolyte **30** et/ou couche de séparateur **31,** à chaque couche de cathode **50** ainsi qu'à chaque couche de substrat collecteur de courant cathodique **40,** et
- selon le second sens longitudinal **XX"** de la batterie, opposé audit premier sens longitudinal **XX',** chaque substrat collecteur de courant cathodique **40** fait saillie par rapport à la fois à chaque couche d'anode **20,** à chaque couche de matériau d'électrolyte **30** et/ou couche de séparateur **31,** à chaque couche de cathode **50** ainsi qu'à chaque couche de substrat collecteur de courant anodique **10.**
Dans le cas où ladite batterie comprend une pluralité de cellules élémentaires **100, 100', 100",** lesdites cellules élémentaires **100, 100', 100"** sont disposées les unes au-dessous des autres, à savoir superposées selon une direction frontale **ZZ** au plan principal de la batterie comme représenté en figure 10, de sorte que, de préférence :
∘ le substrat collecteur de courant anodique **10** est le substrat collecteur de courant anodique **10** de deux cellules élémentaires **100, 100' , 100"** adjacentes, et en ce que
∘ le substrat collecteur de courant cathodique **40** est le substrat collecteur de courant cathodique **40** de deux cellules élémentaires **100, 100', 100"** adjacentes.

On suppose que l'empilement, décrit ci-dessus, est soumis à des étapes visant à assurer sa stabilité mécanique globale. Ces étapes, de type connu en soi, incluent notamment le thermopressage des différentes couches. Comme on va le voir ci-dessous, cet empilement ainsi consolidé permet la formation de batteries individuelles, dont le nombre est égal au produit entre le nombre de lignes Y et le nombre de rangées X.

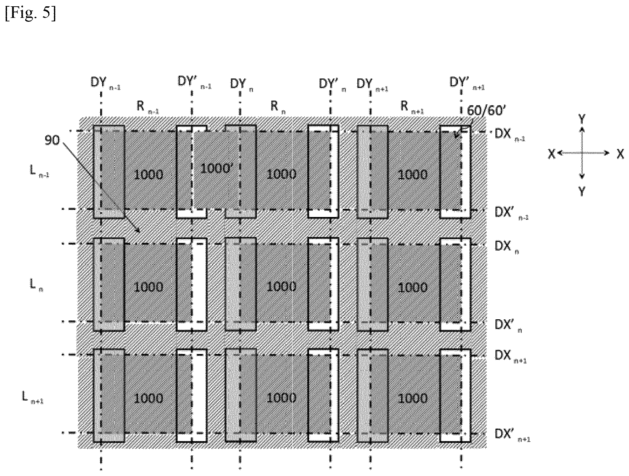

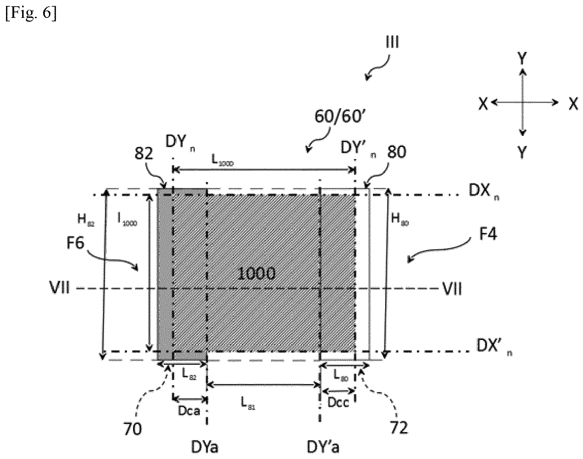

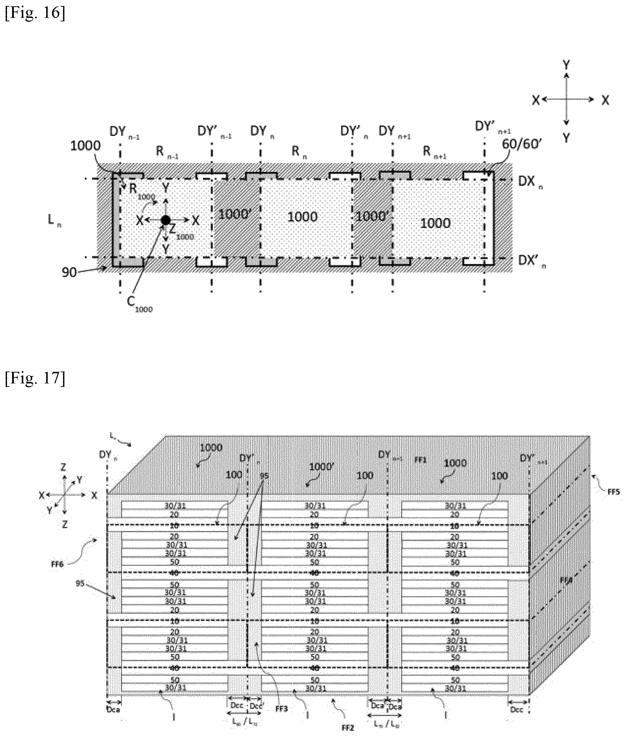

À cet effet, en référence à la figure 5, on a illustré trois lignes **Lₙ₋₁** à **Lₙ₊₁,** ainsi que trois rangées **Rₙ₋₁** à **R**_{**n**+1}. Conformément à l'invention, et lorsque l'empilement **I** comprend plusieurs lignes i.e. au moins deux lignes d'entités élémentaires aussi appelée ci-après ligne de batteries **Lₙ**, on réalise une première paire de découpes **DXₙ** et **DX'ₙ** permettant de séparer une ligne **Lₙ** de batteries **1000** donnée vis-à-vis d'au moins une autre ligne **L**_{**n**-}**₁, Lₙ₊₁** de batteries formée à partir dudit empilement consolidé, comme cela est représenté en figures 16 et 17. Chaque découpe, qui s'effectue de manière traversante, à savoir qu'elle s'étend sur l'ensemble de la hauteur de l'empilement, est réalisée de manière connue en soi. À titre d'exemples non limitatifs, on citera la découpe par sciage, notamment la découpe en dés, la découpe par guillotine ou encore la découpe par laser. De plus, on a illustré avec un remplissage en trait plein les zones **90** des feuilles de l'empilement, qui ne forment pas les batteries, alors que le volume des fentes est laissé en blanc et celui des épargnes en gris.
Comme le montre notamment la figure 6, qui est une vue à plus grande échelle de l'une des entités élémentaires **60,60'** de la figure 5, chaque découpe est réalisée selon la direction longitudinale de la batterie, selon le premier sens longitudinal **XX'** ou le second sens longitudinal **XX",** et ce de manière indifférente. Les découpes **DXₙ** et **DX'ₙ** sont, de préférence, mutuellement parallèles et, sont, de préférence, réalisées de manière perpendiculaire à la fois à l'alignement des fentes **80,70** et des épargnes **72,82** des entités élémentaires **60,60', 60".**
En référence à nouveau à la figure 5, chaque batterie finale est délimitée, à l'avant et à l'arrière, par les deux découpes **DXₙ et DX'ₙ** de préférence mutuellement parallèles, et, à droite et à gauche par une seconde paire de découpes **DYₙ** et **DY'ₙ,** de préférence mutuellement parallèles.
Sur cette figure 5 on a représenté de manière hachurée les batteries **1000** une fois découpées selon les lignes de découpe **Dₙ** et **D'ₙ** et selon les lignes de découpes **DYₙ** et **DY'ₙ**.
Dans ces conditions, en référence à cette figure 6, à titre d'exemples non limitatifs, on note :
- la distance **Dca** qui correspond à la plus petite distance entre la première face longitudinale **F6** d'une batterie comprenant au moins une zone de connexion anodique **1002** et le premier plan d'extrémité **DYa.** Cette distance **Dca** est comprise entre 0,01 mm et 0,05 mm, étant entendu que cette distance **Dca** est inférieure ou égale à **L₈₂/ L₇₀**;
- la distance **Dcc** qui correspond à la plus petite distance entre la seconde face longitudinale **F4** d'une batterie comprenant au moins une zone de connexion cathodique **1006** et le second plan d'extrémité **DY'a.** Cette distance **Dcc** est comprise entre 0,01 mm et 0,05 mm, étant entendu que cette distance **Dcc** est inférieure ou égale à **L₇₂**/**L₈₀** ;

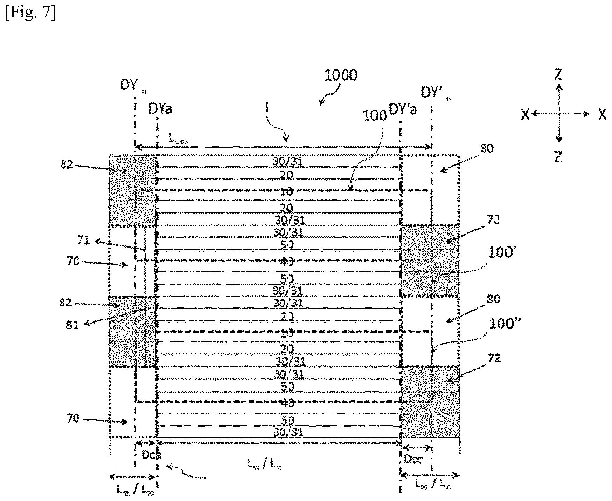

La figure 7 est une vue en coupe, prise selon la ligne de coupe **VII-VII** qui s'étend au travers de la batterie. Sur la figure 7, on a représenté l'agencement alterné de deux feuilles anodiques présentant des entités élémentaires **2e** et de deux feuilles cathodiques présentant des entités élémentaires **5e.** Sur la même figure, on a référencé les fentes **70,80,** les zones revêtues **71,81** et les épargnes **72,82** des entités élémentaires **60,60',** illustrées également en figure 6, ainsi que des cellules élémentaires adjacentes selon un mode de réalisation avantageux de l'invention.
La feuille anodique présentant des entités élémentaires **2e** comprend un substrat collecteur de courant anodique **10** revêtu d'une couche d'anode **20,** elle-même optionnellement revêtue d'une couche d'électrolyte **30** ou d'une couche de séparateur **31** ultérieurement imprégné d'un électrolyte. Chaque feuille cathodique présentant des entités élémentaires **5e** comprend un substrat collecteur de courant cathodique **40** revêtu d'une couche active d'un matériau de cathode **50,** elle-même optionnellement revêtue d'une couche d'électrolyte **30** ou d'une couche de séparateur **31** ultérieurement imprégné d'un électrolyte. Afin d'éviter tout contact électrique entre deux couches actives de polarité opposée, i.e. entre la couche d'anode **20** et la couche de cathode **50,** il est disposé au moins une couche d'électrolyte **30** et/ou au moins une couche de séparateur **31** imprégné ou ultérieurement imprégné d'un électrolyte. Sur la figure 7 est représentée une cellule élémentaire **100** comprenant successivement un substrat collecteur de courant anodique **10,** une couche d'anode **20,** au moins une couche d'un matériau d'électrolyte **30** ou une couche de séparateur **31** imprégné ou ultérieurement imprégné d'un électrolyte, une couche de cathode **50,** et un substrat collecteur de courant cathodique **40.** Avantageusement, le substrat collecteur de courant anodique **10** d'une cellule élémentaire **100'** peut être accolé au substrat collecteur de courant anodique **10** de la cellule élémentaire adjacente **100".** De manière analogue, le substrat collecteur de courant cathodique **40** d'une cellule élémentaire **100** peut être accolé au substrat collecteur de courant cathodique **40** de la cellule élémentaire adjacente **100'.**
Dans un mode de réalisation avantageux, le substrat collecteur de courant anodique **10,** respectivement cathodique **40,** peut servir de collecteur de courant pour deux cellules élémentaires adjacentes, comme cela est notamment illustré en figure 7. Comme explicité précédemment, les deux faces du substrat collecteur de courant anodique **10,** respectivement cathodique **40,** sont revêtues d'une couche d'anode **20,** respectivement d'une couche de cathode **50,** et optionnellement d'une couche d'électrolyte **30** ou d'une couche de séparateur **31,** disposée sur la couche d'anode **20,** respectivement sur la couche de cathode **50.** Ceci permet d'accroître le rendement de production des batteries. Comme représenté en figure 7, chaque feuille anodique présentant des entités élémentaires **2e** et cathodique présentant des entités élémentaires **5e** sont agencées de manière à ce que chaque épargne cathodique **72** soit réalisée dans le prolongement de chaque fente anodique **80** et à ce que chaque épargne anodique **82** soit réalisée dans le prolongement de chaque fente cathodique **70.**
Selon le premier sens longitudinal **XX',** chaque substrat collecteur de courant anodique **10** fait saillie par rapport à un premier plan d'extrémité **DYa,** ce premier plan étant défini par les premières extrémités longitudinales de chaque couche d'anode **20,** de chaque couche de matériau d'électrolyte **30** ou couche de séparateur **31,** de chaque couche de cathode **50** ainsi que de chaque couche de substrat collecteur de courant cathodique **40.**
Selon le second sens longitudinal **XX"** de la batterie, opposé audit premier sens longitudinal **XX',** chaque substrat collecteur de courant cathodique **40** fait saillie par rapport à la fois à chaque couche d'anode **20,** à chaque couche de matériau d'électrolyte **30** ou couche de séparateur **31** imprégné ou ultérieurement imprégné d'un électrolyte, à chaque couche de cathode **50** ainsi qu'à chaque couche de substrat collecteur de courant anodique **10.**
Il s'agit là d'une caractéristique particulièrement avantageuse de l'invention, puisque cela permet d'éviter la présence de court-circuit au niveau des bords latéraux de la batterie, d'éviter la présence de courant de fuite, et de faciliter les prises de contact électrique au niveau des zones de connexion anodiques **1002** et cathodique **1006.**
En vue en coupe, les épargnes cathodiques **72** sont superposées aux fentes anodiques **80** et les épargnes anodiques **82** sont superposées aux fentes cathodiques **70.**

Avantageusement, après la réalisation de l'empilement des feuilles anodiques présentant des entités élémentaires **2e** et cathodiques présentant des entités élémentaires **5e,** on consolide l'empilement **I** par traitement thermique et/ou mécanique (ce traitement pouvant être un traitement de thermocompression, comprenant l'application simultané d'une pression et d'une température élevée). Le traitement thermique de l'empilement permettant l'assemblage de la batterie est avantageusement réalisé à une température comprise entre 50°C et 500°C, de préférence à une température inférieure à 350 °C. La compression mécanique de l'empilement des feuilles anodiques présentant des entités élémentaires **2e** et des feuilles cathodiques présentant des entités élémentaires **5e** à assembler est réalisée à une pression comprise entre 10 MPa et 100 MPa, de préférence entre 20 MPa et 50 MPa.

On vient de décrire la réalisation de l'empilement consolidé des couches qui constituent la batterie. On peut ensuite, lorsque l'empilement **I** comprend plusieurs lignes i.e. au moins deux lignes d'entités élémentaires aussi appelées ci-après lignes de batteries **Lₙ**, réaliser une première paire de découpes **DXₙ** et **DX'ₙ** permettant de séparer une ligne **Lₙ** de batteries **1000** donnée vis-à-vis d'au moins une autre ligne **L**_{**n**-1}**, Lₙ₊₁** de batteries formée à partir dudit empilement consolidé. Chaque découpe, qui s'effectue de manière traversante, à savoir qu'elle s'étend sur l'ensemble de la hauteur de l'empilement, est réalisée de manière connue en soi, comme indiqué précédemment. Comme représenté en figure 17, la ligne de batteries **Lₙ** présente six faces, à savoir :
- deux faces dites frontales **FF1, FF2** mutuellement opposées, en particulier mutuellement parallèles, globalement parallèles au(x) substrat(s) collecteur de courant anodique **10,** au(x) couche(s) d'anode **20,** au(x) couche(s) d'un matériau d'électrolyte **30** ou au(x) couche(s) de séparateur imprégné d'un électrolyte **31,** au(x) couche(s) de cathode **50,** et au(x) substrat(s) collecteur de courant cathodique **40,**
- deux faces dites latérales **FF3, FF5** mutuellement opposées, en particulier mutuellement parallèles et parallèles aux faces latérales **F3,F5** de la batterie **1000,**
- et deux faces dites longitudinales **FF4, FF6,** mutuellement opposées, en particulier mutuellement parallèles et parallèles aux faces longitudinales **F4,F6** de la batterie **1000.**

Lorsqu'un séparateur est employé comme matrice hôte d'un électrolyte, on peut imprégner l'empilement consolidé précédemment obtenu ou la ligne **Lₙ** de batteries **1000** lorsque l'empilement **I** initial comprend plusieurs lignes de batteries **Lₙ** et qu'une première paire de découpes (DXn, DX'n) a été réalisée afin de séparer la ligne (Lₙ) de batteries (1000) donnée vis-à-vis d'au moins une autre ligne (Lₙ₋₁, Lₙ₊₁) de batteries (1000) formée à partir dudit empilement consolidé. L'imprégnation de l'empilement consolidé précédemment obtenu ou de la ligne **Lₙ** de batteries **1000** peut être réalisée, par une phase porteuse d'ions de lithium telle que des électrolytes liquides ou un liquide ionique contenant des sels de lithium, de sorte que ledit séparateur (31) soit imprégné par un électrolyte.

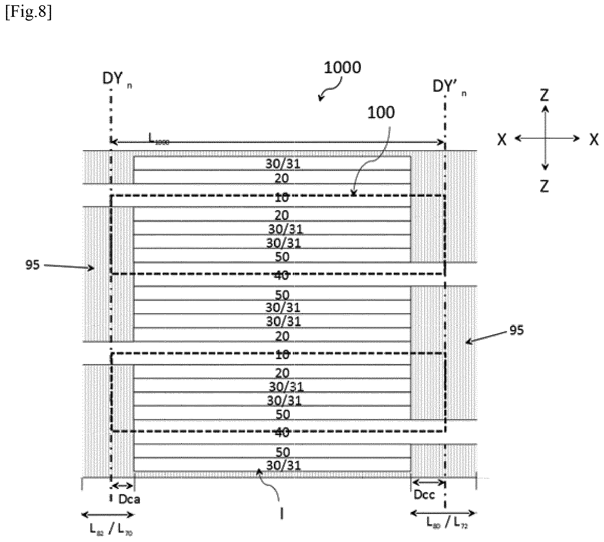

Après la réalisation d'un empilement **I** consolidé, et éventuellement imprégné par une phase porteuse d'ions de lithium, on encapsule cet empilement ou la ligne **Lₙ** de batteries **1000** en déposant un système d'encapsulation **95** pour assurer la protection de la cellule de la batterie vis-à-vis de l'atmosphère, comme cela est représenté en figure 8. Le système d'encapsulation doit avantageusement être stable chimiquement, résister à une température élevée et être imperméable à l'atmosphère pour jouer sa fonction de couche barrière.
L'empilement peut être recouvert d'un système d'encapsulation comprenant :
- optionnellement une première couche de recouvrement dense et isolante, de préférence choisi parmi le parylène, le parylène de type F, le polyimide, les résines époxy, le silicone, le polyamide, la silice sol-gel, la silice organique et/ou un mélange de ceux-ci, déposée sur l'empilement de feuilles anodique et cathodique; et
- optionnellement une deuxième couche de recouvrement composée d'une matière électriquement isolante, déposée par dépôt de couches atomiques sur l'empilement de feuilles anodique et cathodique ou sur ladite première couche de recouvrement ; et
- de manière particulièrement avantageuse, au moins une troisième couche de recouvrement étanche, de préférence ayant une perméance à la vapeur d'eau (WVTR) inférieure à 10⁻⁵ g/m².d, cette troisième couche de recouvrement étant composée d'un matériau céramique et/ou d'un verre à bas point de fusion, de préférence d'un verre dont le point de fusion est inférieur à 600°C, déposée à la périphérie externe de l'empilement de feuilles anodique et cathodique ou de la première couche de recouvrement,
   étant entendu que cette séquence d'au moins une deuxième couche de recouvrement et d'au moins une troisième couche de recouvrement peut être répétée z fois avec z ≥ 1 et déposée à la périphérie externe d'au moins la troisième couche de recouvrement, et que la dernière couche du système d'encapsulation est une couche de recouvrement étanche, de préférence ayant une perméance à la vapeur d'eau (WVTR) inférieure à 10⁻⁵ g/m².d qui est composée d'un matériau céramique et/ou d'un verre à bas point de fusion.
Cette séquence peut être répétée z fois avec z ≥ 1. Elle présente un effet barrière, qui est d'autant plus important que la valeur de z est élevée.
On obtient ainsi une encapsulation rigide et étanche, qui empêche notamment le passage de la vapeur d'eau au niveau de l'interface entre le système d'encapsulation et les organes de contact (cf. interface A).

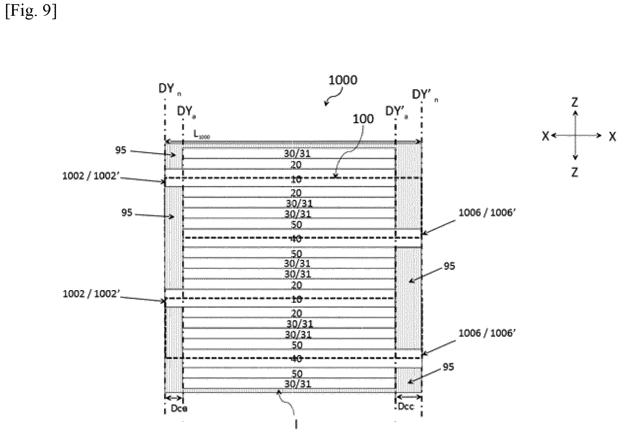

La mesure de la perméance à la vapeur d'eau peut se faire à l'aide d'une méthode qui fait l'objet du US 7,624,621 et qui est également décrite dans la publication « Structural properties of ultraviolet cured polysilazane gas barrier layers on polymer substrates » par A. Mortier et al., parue dans la revue Thin Solid Films 6+550 (2014) 85-89.
Typiquement, la première couche de recouvrement, qui est optionnelle, est sélectionnée dans le groupe formé par : les silicones (déposés par exemple par imprégnation ou par dépôt chimique en phase vapeur assisté par plasma à partir d'hexaméthyldisiloxane (HMDSO)), les résines époxy, le polyimide, le polyamide, le poly-para-xylylène (appelé aussi poly(p-xylylène), mais plus connu sous le terme parylène), et/ou un mélange de ceux-ci. Lorsqu'une première couche de recouvrement est déposée, elle permet de protéger les éléments sensibles de la batterie de son environnement. L'épaisseur de ladite première couche de recouvrement est, de préférence, comprise entre 0,5 µm et 3 µm. Cette première couche de recouvrement est utile surtout lorsque les couches d'électrolytes et d'électrodes de la batterie présentent des porosités : elle agit comme une couche de planarisation, qui présente également un effet de barrière. A titre d'exemple, cette première couche est capable de tapisser la surface des microporosités débouchantes sur la surface de la couche, pour en fermer l'accès.
Dans cette première couche de recouvrement, différentes variantes de parylène peuvent être utilisées. Elle peut être en parylène de type C, en parylène de type D, en parylène de type N (CAS 1633-22-3), en parylène de type F, ou en un mélange de parylène de type C, D, N et/ou F. Le parylène est un matériau diélectrique, transparent, semi cristallin, qui présente une grande stabilité thermodynamique, une excellente résistance aux solvants ainsi qu'une très faible perméabilité. Le parylène a également des propriétés barrières. On préfère dans le cadre de la présente invention le parylène de type F.
Cette première couche de recouvrement est avantageusement obtenue à partir de la condensation de monomères gazeux déposés par dépôt chimique en phase vapeur (CVD) sur les surfaces de l'empilement de la batterie, ce qui permet d'avoir un recouvrement conformai, mince et uniforme de l'ensemble des surfaces accessibles de l'empilement. Cette première couche de recouvrement est avantageusement rigide ; elle ne peut pas être considérée comme une surface souple.
La deuxième couche de recouvrement, qui est également optionnelle, est composée d'une matière électriquement isolante, de préférence inorganique. Elle est déposée par dépôt de couches atomiques (en anglais « Atomic Layer Déposition », ALD), par PECVD, par HDPCVD (en anglais « High Density Plasma Chemical Vapor Déposition ») ou par ICPCVD (Inductively Coupled Plasma Chemical Vapour Déposition en anglais), de manière à obtenir un recouvrement conformai de l'ensemble des surfaces accessibles de l'empilement préalablement recouvert de la première couche de recouvrement. Les couches déposées par ALD sont très fragiles mécaniquement et nécessitent une surface d'appui rigide pour assurer leur rôle protecteur. Le dépôt d'une couche fragile sur une surface souple conduirait à la formation de fissures, engendrant une perte d'intégrité de cette couche de protection. Par ailleurs, la croissance de la couche déposée par ALD est influencée par la nature du substrat. Une couche déposée par ALD sur un substrat présentant des zones de natures chimiques différentes aura une croissance inhomogène, pouvant engendrer une perte d'intégrité de cette couche de protection. Pour cette raison il est préférable que cette deuxième couche optionnelle, si elle est présente, prenne appui sur ladite première couche optionnelle, ce qui assure un substrat de croissance chimiquement homogène.
Les techniques de dépôt par ALD sont particulièrement bien adaptées pour recouvrir des surfaces présentant une forte rugosité de manière totalement étanche et conforme. Elles permettent de réaliser des couches conformales, exemptes de défauts, tels que des trous (couches dits « pinhole free », i.e. exempts de trous) et représentent de très bonnes barrières. Leur coefficient WVTR est extrêmement faible. Le coefficient WVTR (Water Vapor Transmission Rate) permet d'évaluer la perméance à la vapeur d'eau du système d'encapsulation. Plus le coefficient WVTR est faible plus le système d'encapsulation est étanche. L'épaisseur de cette deuxième couche est avantageusement choisie en fonction du niveau d'étanchéité aux gaz souhaité, i.e du coefficient WVTR souhaité et dépend de la technique de dépôt utilisée, notamment parmi l'ALD, le PECVD, HDPCVD et le HDCVDICPCVD.
Ladite deuxième couche de recouvrement peut être en matériau céramique, en matériau vitreux ou en matériau vitrocéramique, par exemple sous forme d'oxyde, de type Al₂O₃, de Ta₂O₅, de nitrure, de phosphates, d'oxynitrure, ou de siloxane. Cette deuxième couche de recouvrement présente, de préférence, une épaisseur comprise 10 nm et 10 µm, de préférence entre 10 nm et 50 nm.
Cette deuxième couche de recouvrement déposée par ALD, par PECVD, par HDPCVD (en anglais « High Density Plasma Chemical Vapor Déposition ») ou par ICPCVD (Inductively Coupled Plasma Chemical Vapour Déposition en anglais) sur la première couche de recouvrement permet d'une part, d'assurer l'étanchéité de la structure, i.e. d'empêcher la migration de l'eau à l'intérieur de l'objet et d'autre part de protéger la première couche de recouvrement, de préférence de parylène de type F, de l'atmosphère, notamment de l'air et de l'humidité, des expositions thermiques afin d'éviter sa dégradation. Cette deuxième couche de recouvrement améliore ainsi la durée de vie de la batterie encapsulée.
Ladite deuxième couche de recouvrement peut aussi être déposée directement sur l'empilement de feuilles anodiques et cathodique, c'est-à-dire dans un cas où ladite première couche de recouvrement n'a pas été déposée.
La troisième couche de recouvrement doit être étanche et présente de préférence une perméance à la vapeur d'eau (WVTR) inférieure à 10⁻⁵ g/m².d. Cette troisième couche de recouvrement est composée d'un matériau céramique et/ou d'un verre à bas point de fusion, de préférence d'un verre dont le point de fusion est inférieur à 600°C, déposée à la périphérie externe de l'empilement de feuilles anodique et cathodique ou de la première couche de recouvrement. Le matériau céramique et/ou verre employé dans cette troisième couche est, avantageusement choisi parmi :
- un verre à bas point de fusion (typiquement < 600°C), de préférence SiO₂-B₂O₃ ; Bi₂O₃-B₂O₃, ZnO-Bi₂O₃-B₂O₃, TeO₂-V₂O₅, PbO-SiO₂,
- des oxydes, des nitrures, des oxynitrures, du SiₓN_{y}, SiO₂, SiON du Silicium amorphe ou du SiC.
Ces verres peuvent être déposés par moulage ou par dip-coating.
Les matériaux céramiques sont avantageusement déposés par PECVD ou préférentiellement par HDPCVD ou par ICP CVD à basse température ; ces procédés permettent de déposer une couche ayant de bonnes propriétés d'étanchéité.
L'empilement ainsi enrobé est ensuite découpé par tout moyen approprié selon les lignes de coupe **DYn** et **DY'n** de manière à mettre à nu les zones de connexions anodiques **1002** et cathodiques **1006** et à obtenir des batteries unitaires comme cela est représenté en figure 9.
Comme représenté sur les figures 9 et 10, les découpes de l'empilement consolidé et encapsulé selon les lignes de coupe **DYn** et **DY'n** sont réalisées de manière à ce que :
- seul chaque chant anodique **1002'** de chaque substrat collecteur de courant anodique **10** fait saillie par rapport au premier plan d'extrémité **DYₐ**, ce premier plan étant défini par les premières extrémités longitudinales de chaque couche d'anode **20,** de chaque couche de matériau d'électrolyte **30** et/ou couche de séparateur **31,** de chaque couche de cathode **50** ainsi que de chaque couche de substrat collecteur de courant cathodique **40** selon le premier sens longitudinal **XX'** de la batterie, affleure une première face longitudinale **F6,** et que
- seul chaque chant cathodique **1006'** de chaque substrat collecteur de courant cathodique **40** fait saillie par rapport au second plan d'extrémité (DY'ₐ), ce second plan étant défini par les secondes extrémités longitudinales de chaque couche d'anode **20,** de chaque couche de matériau d'électrolyte **30** et/ou couche de séparateur **31,** de chaque couche de cathode **50** ainsi que de chaque couche de substrat collecteur de courant anodique **10** selon le second sens longitudinal **XX"** de la batterie, affleure une seconde face longitudinale **F4,** ladite seconde face longitudinale **F4** étant de préférence opposée et parallèle à la première face longitudinale **F6,**
   étant entendu que chaque chant anodique **1002'** définit une zone de connexion anodique **1002** et que chaque chant cathodique **1006'** définit une zone de connexion cathodique **1006.**

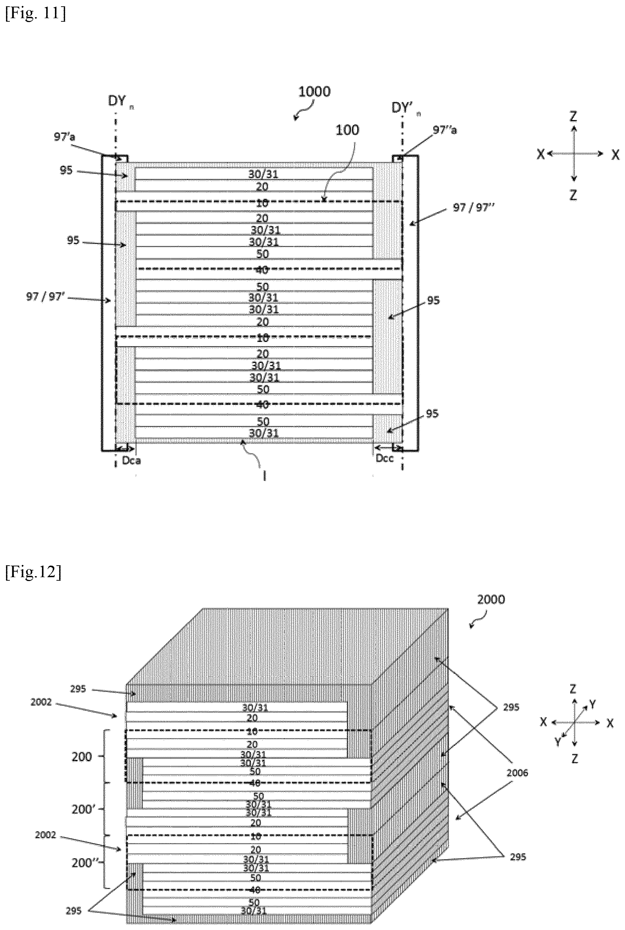

Des organes de contact **97,97', 97"** (contacts électriques) sont ajoutés au niveau où les zones de connexions cathodiques **1006,** respectivement anodiques **1002** sont apparentes. Ces zones de contact sont, de préférence, disposées sur des côtés opposés de l'empilement de la batterie pour collecter le courant (collecteurs de courant latéraux). Les organes de contact **97,97', 97"** sont disposés sur au moins la zone de connexion cathodique **1006** et sur au moins la zone de connexion anodique **1002,** de préférence sur la face de l'empilement enrobé et découpé comprenant au moins la zone de connexion cathodique **1006** et sur la face de l'empilement enrobé et découpé comprenant au moins la zone de connexion anodique **1002** (cf. figure 11).
Ainsi, on recouvre au moins la zone de connexion anodique **1002,** de préférence au moins la première face longitudinale **F6** comprenant au moins la zone de connexion anodique **1002,** et plus préférentiellement la première face longitudinale **F6** comprenant au moins la zone de connexion anodique **1002,** et les extrémités **97'a** des faces adjacentes **F1,F2,F3,F5** à cette première face longitudinale **F6,** par un organe de contact anodique **97',** apte à assurer le contact électrique entre l'empilement **I** et un élément conducteur externe. Par ailleurs, on recouvre au moins la zone de connexion cathodique **1006,** de préférence au moins la seconde face longitudinale **F4** comprenant au moins la zone de connexion cathodique **1006,** et plus préférentiellement la seconde face longitudinale **F4** comprenant au moins la zone de connexion cathodique **1006,** et les extrémités **97"a** des faces adjacentes **F1,F2,F3,F5** à cette seconde face longitudinale **F4,** par un organe de contact cathodique **97",** apte à assurer le contact électrique entre l'empilement **I** et un élément conducteur externe.
De préférence, les organes de contact **97,97', 97"** sont constitués, aux abords des zones de connexions cathodique **1006** et anodique **1002,** d'un empilement **I** de couches comprenant successivement une première couche de connexion électrique comprenant un matériau chargé en particules électriquement conductrices, de préférence une résine polymérique et/ou un matériau obtenu par un procédé sol-gel, chargé en particules électriquement conductrices et encore plus préférentiellement une résine polymérique chargée en graphite, et une deuxième couche constituée d'une feuille métallique disposée sur la première couche.
La -première couche de connexion électrique permet de fixer la deuxième couche de connexion électrique subséquente tout en procurant de la « souplesse » à la connectique sans rompre le contact électrique lorsque le circuit électrique est soumis à des contraintes thermiques et/ou vibratoires.
La deuxième couche de connexion électrique est une feuille métallique. Cette deuxième couche de connexion électrique est utilisée pour protéger durablement de l'humidité les batteries. D'une manière générale, pour une épaisseur donnée de matériau, les métaux permettent de réaliser des films très étanches, plus étanches que ceux à base de céramiques et encore plus étanches que ceux à base de polymères qui sont généralement peu hermétiques au passage de molécules d'eau. Elle permet d'augmenter la durée de vie calendaire de la batterie en réduisant le WVTR au niveau des organes de contact.
Avantageusement, une troisième couche de connexion électrique comprenant une encre conductrice peut être déposée sur la deuxième couche de connexion électrique ; elle sert à réduire le WVTR, ce qui augmente la durée de vie de la batterie.
Les organes de contact **97,97', 97"** permettent de reprendre les connexions électriques alternativement positives et négatives sur chacune des extrémités. Ces organes de contact **97,97', 97"** permettent de réaliser les connexions électriques en parallèle entre les différents éléments de batterie. Pour cela, seules les connexions cathodiques sortent sur une extrémité, et les connexions anodiques sont disponibles sur une autre extrémité.

La demande WO 2016/001584 décrit des empilements de plusieurs cellules élémentaires, constituées de feuilles anodiques et cathodiques empilées de manière alternée et décalée latéralement (cf. figure 12), encapsulés dans un système d'encapsulation **295** pour assurer la protection de la cellule de la batterie **2000** vis-à-vis de l'atmosphère. La découpe de ces empilements encapsulés permettant d'obtenir des batteries unitaires, avec des zones de connexions anodique **2002** et cathodique **2006** à nu, est réalisée selon un plan de coupe traversant une succession alternée d'électrode et de système d'encapsulation. De par la différence de densité existant entre l'électrode et le système d'encapsulation de la batterie de l'art antérieur, la découpe réalisée selon ce plan de coupe induit un risque d'arrachement du système d'encapsulation aux abords du plan de coupe, et ainsi la création de courts-circuits. Dans la demande WO 2016/001584, lors de l'encapsulation, la couche d'encapsulation remplit les interstices de l'empilement des feuilles portant des découpes en forme de U. Cette couche d'encapsulation introduite au niveau de ces interstices est épaisse et n'adhère pas très bien à l'empilement induisant ce risque d'arrachement du système d'encapsulation **2095** lors de la découpe ultérieure.
Selon la présente invention, ce risque est supprimé avec l'emploi de feuilles portant des entités élémentaires où :
- selon le premier sens longitudinal **XX',** chaque substrat collecteur de courant anodique **10** fait saillie par rapport au premier plan d'extrémité **DYa,** ce premier plan étant défini par les premières extrémités longitudinales de chaque couche d'anode **20,** de chaque couche de matériau d'électrolyte **30** ou couche de séparateur **31,** de chaque couche de cathode **50** ainsi que de chaque couche de substrat collecteur de courant cathodique **40,** et
- selon le second sens longitudinal **XX"** de la batterie, opposé audit premier sens longitudinal **XX',** chaque substrat collecteur de courant cathodique **40** fait saillie par rapport à la fois à chaque couche d'anode **20,** à chaque couche de matériau d'électrolyte **30** ou couche de séparateur **31** imprégné ou ultérieurement imprégné d'un électrolyte, à chaque couche de cathode **50** ainsi qu'à chaque couche de substrat collecteur de courant anodique **10.**

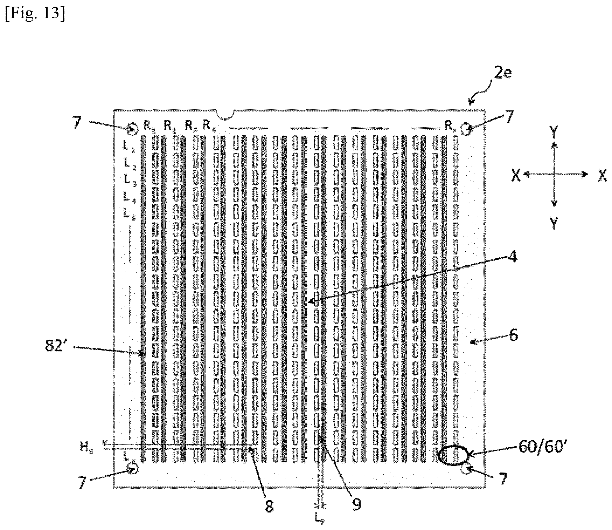

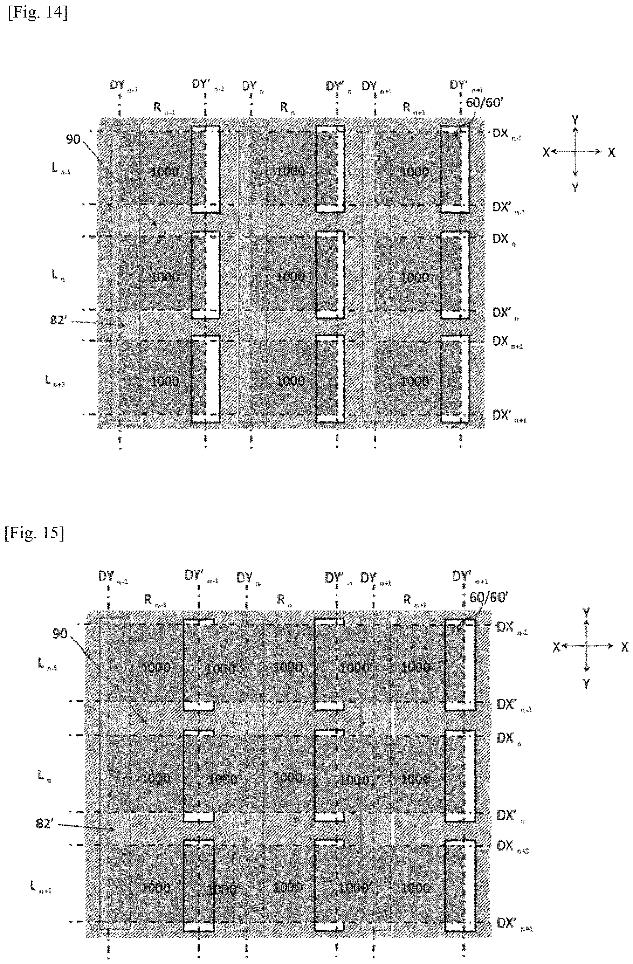

La structure mécanique thermopressée d'entité élémentaire est extrêmement rigide aux abords de la découpe, du fait de la superposition alternée de feuilles cathodique et anodique. L'utilisation d'une telle structure rigide, avec l'emploi de feuilles portant des entités élémentaires, permet de réduire le nombre de défauts lors des découpes, d'accroitre la vitesse de découpe et ainsi d'améliorer le rendement de production des batteries.
Selon l'invention, les découpes **DY'ₙ** et **DYₙ** sont effectuées au travers des feuilles anodiques présentant des entités élémentaires **2e** et des feuilles cathodiques présentant des entités élémentaires **5e** de densité comparable induisant une découpe propre de meilleure qualité. De plus, aux abords des plans de coupe **DY'ₙ** et **DYₙ**, la présence selon le premier sens longitudinal **XX'** de substrat collecteur de courant anodique **10** libre de tout matériau d'anode, d'électrolyte, de séparateur imprégné ou non d'un électrolyte, de cathode et de substrat collecteur de courant cathodique ainsi que la présence, selon le second sens longitudinal **XX",** de substrat collecteur de courant cathodique **40** libres de tout matériau d'anode, d'électrolyte, de séparateur imprégné ou non d'un électrolyte, de cathode et de substrat collecteur de courant anodique, empêche tout risque de court-circuit et de courant de fuite, et facilite la prise de contact électrique au niveau des zones de connexion **1002,1006.** Les zones de connexion anodique **1002** et les zones de connexion cathodique **1006** sont de préférence latéralement opposées.
La structure singulière de la batterie selon l'invention permet d'éviter la présence de court-circuit au niveau des faces longitudinales **F4,F6** de la batterie, d'éviter la présence de courant de fuite et de faciliter les prises de contact électrique au niveau des zones de connexion anodiques **1002** et cathodique **1006.** En effet, l'absence de matériaux d'électrode et de matériaux d'électrolyte sur les faces longitudinales **F4,F6** de la batterie comprenant les zones de connexion anodique et cathodique, évite la fuite latérale des ions lithium et facilite l'équilibrage de la batterie ; les surfaces efficaces des électrodes en contact les unes des autres, et délimitées par les premier et second plan d'extrémité **DYa,DY'a** sont sensiblement identiques comme représenté sur les figures 7 à 10.
A titre subsidiaire, et comme représenté en figure 5 et en figure 16, des batteries **1000'** peuvent être obtenues selon l'invention. Ces batteries **1000'** correspondent à des batteries **1000** ayant subi une rotation de 180° autour de l'axe **Z₁₀₀₀** qui est un axe parallèle à l'axe frontal **ZZ** passant par le centre **C₁₀₀₀** de la batterie . Les batteries **1000** et **1000'** peuvent avoir des dimensions identiques. Les batteries **1000** et **1000'** peuvent avoir des dimensions longitudinales mutuellement identiques ou différentes. La réalisation des batteries **1000** et **1000'** sur un même empilement permet d'optimiser le rendement de production des batteries tout en minimisant les chutes de matières **90.**
Les batteries selon l'invention peuvent être réalisées à partir d'entités élémentaires selon différentes variantes de l'invention. A titre d'exemple non limitatif, comme représenté en figure 13, les zones revêtues **71,81** des entités élémentaires peuvent être réalisées par enduction par slot-die sur le substrat collecteur de courant **40,10** avec une symétrie dans le sens de défilement du substrat. Ceci permet de laisser directement des zones non revêtues **72,82** sur le substrat et ainsi de réduire le nombre d'étape du procédé de fabrication des entités élémentaires sur les feuilles cathodiques et anodiques. Les épargnes de chaque entité élémentaire d'une même rangée **R** peuvent être communes et former une bande d'épargnes **82'** (cf. figures 13 & 14).
Comme représenté en figure 15, des batteries **1000'** additionnelles peuvent être obtenues selon l'invention et selon cette même variante de l'invention. Ces batteries **1000'** correspondent à des batteries **1000** ayant subi une rotation de 180° autour de l'axe **Z₁₀₀₀** qui est un axe parallèle à la direction frontal **ZZ** passant par le centre **C₁₀₀₀** de la batterie. La réalisation des batteries **1000** et **1000'** sur un même empilement permet d'optimiser le rendement de production des batteries tout en minimisant les chutes de matières **90.**
A titre d'alternative non représenté, les épargnes de chaque entité élémentaire d'une rangée **Rₙ** peuvent être réalisées à partir d'une bande d'épargnes commune à chaque entité élémentaire d'une même rangée **Rₙ**, ce qui permet d'optimiser le rendement de production des batteries tout évitant la présence de chute de matières **90.** La partie centrale **4** de l'empilement des feuilles alternées est alors entièrement utilisée pour la fabrication de batteries selon l'invention.

Le procédé selon l'invention est particulièrement adapté à la fabrication de batteries entièrement solides, i.e. de batteries dont les électrodes et l'électrolyte sont solides et ne comprennent pas de phase liquide, même imprégnées dans la phase solide.
Le procédé selon l'invention est particulièrement adapté à la fabrication de batteries considérées comme quasi-solides comprenant au moins un séparateur **31** imprégné d'un électrolyte. Le séparateur est, de préférence, une couche inorganique poreuse présentant :
- une porosité, de préférence, une porosité mésoporeuse, supérieure à 30%, de préférence comprise entre 35% et 50%, et encore plus préférentiellement entre 40 % et 50 %,
- des pores de diamètre moyen D₅₀ inférieur à 50 nm.

L'épaisseur du séparateur est avantageusement inférieure à 10 µm, et préférentiellement compris entre 2,5 µm et 4,5 µm, de manière à réduire l'épaisseur finale de la batterie sans amoindrir ses propriétés. Les pores du séparateur sont imprégnés par un électrolyte, de préférence, par une phase porteuse d'ions de lithium telle que des électrolytes liquides ou un liquide ionique contenant des sels de lithium. Le liquide « nanoconfiné » ou « nanopiégé » dans les porosités, et en particulier dans les mésoporosités, ne peut plus ressortir. Il est lié par un phénomène appelé ici « d'absorption dans la structure mésoporeuse » (qui ne semble pas avoir été décrit dans la littérature dans le contexte des batteries à ions de lithium) et il ne peut plus sortir même lorsque la cellule est mise sous vide. La batterie est alors considérée comme quasi-solide.

La batterie selon l'invention peut être une microbatterie aux ions de lithium, une minibatterie aux ions de lithium, ou encore une batterie à ions de lithium de forte puissance. En particulier, elle peut conçue et dimensionnée de manière à avoir une capacité inférieure ou égale à environ 1 mA h (appelée couramment « microbatterie »), de manière à avoir une puissance supérieure à environ 1 mA h jusqu'à environ 1 A h (appelée couramment « minibatterie »), ou encore de manière à avoir une capacité supérieure à environ 1 A h (appelée couramment « batterie de puissance »). De manière typique, les microbatteries sont conçues de manière à être compatibles avec les procédés de fabrication de la microélectronique.
Les batteries de chacune de ces trois gammes de puissance peuvent être réalisées :
- soit avec des couches de type « tout solide », i.e. dépourvues de phases liquides ou pâteuses imprégnées (lesdites phases liquides ou pâteuses pouvant être un milieu conducteur d'ions de lithium, capable d'agir comme électrolyte),
- soit avec des couches de type « tout solide » mésoporeuses, imprégnées par une phase liquide ou pâteuse, typiquement un milieu conducteur d'ions de lithium, qui entre spontanément à l'intérieur de la couche et qui ne ressort plus de cette couche, de sorte que cette couche puisse être considérée comme quasi-solide,
- soit avec des couches poreuses imprégnées (i.e. couches présentant un réseau de pores ouverts qui peuvent être imprégnés avec une phase liquide ou pâteuse, et qui confère à ces couches des propriétés humides).

## Revendications

1. Batterie (1000) comprenant au moins une cellule élémentaire (100),
chaque cellule élémentaire (100) comprend successivement un substrat collecteur de courant anodique (10), une couche d'anode (20), au moins une couche d'un matériau d'électrolyte (30) et/ou au moins une couche de séparateur imprégné d'un électrolyte (31), une couche de cathode (50), et un substrat collecteur de courant cathodique (40),
sachant que dans le cas où ladite batterie comprend une pluralité de cellules élémentaires (100, 100', 100"), lesdites cellules élémentaires (100, 100', 100") sont disposées les unes au-dessous des autres, à savoir superposées selon une direction frontale (ZZ) au plan principal de la batterie, de sorte que, de préférence :
∘ le substrat collecteur de courant anodique (10) est le substrat collecteur de courant anodique (10) de deux cellules élémentaires (100, 100' , 100") adjacentes, et en ce que
∘ le substrat collecteur de courant cathodique (40) est le substrat collecteur de courant cathodique (40) de deux cellules élémentaires (100, 100', 100") adjacentes,
ladite au moins cellule élémentaire ou lesdites cellules élémentaires (100, 100', 100") définissent un empilement (I),
ledit empilement (I) et ladite batterie présentant six faces, à savoir
- deux faces dites frontales (F1, F2) mutuellement opposées, en particulier mutuellement parallèles, globalement parallèles au(x) substrat(s) collecteur de courant anodique (10), au(x) couche(s) d'anode (20), au(x) couche(s) d'un matériau d'électrolyte (30) ou au(x) couche(s) de séparateur imprégné d'un électrolyte (31), au(x) couche(s) de cathode (50), et au(x) substrat(s) collecteur de courant cathodique (40),
- deux faces dites latérales (F3, F5) mutuellement opposées, en particulier mutuellement parallèles,
- et deux faces dites longitudinales (F4, F6), mutuellement opposées, en particulier mutuellement parallèles,
étant entendu que la première face longitudinale (F6) de la batterie comprend au moins une zone de connexion anodique (1002) et qu'une seconde face longitudinale (F4) de la batterie comprend au moins une zone de connexion cathodique (1006), lesdites zones de connexion anodique (1002) et cathodique (1006) étant latéralement opposées,
**caractérisée en ce que**
- selon un premier sens longitudinal (XX') de la batterie, chaque substrat collecteur de courant anodique (10) fait saillie par rapport à la fois à chaque couche d'anode (20), à chaque couche de matériau d'électrolyte (30) ou couche de séparateur imprégné d'un électrolyte (31), à chaque couche de cathode (50) ainsi qu'à chaque couche de substrat collecteur de courant cathodique (40), et
- selon un second sens longitudinal (XX") de la batterie, opposé audit premier sens longitudinal (XX'), chaque substrat collecteur de courant cathodique (40) fait saillie par rapport à la fois à chaque couche d'anode (20), à chaque couche de matériau d'électrolyte (30) ou couche de séparateur imprégné d'un électrolyte (31), à chaque couche de cathode (50) ainsi qu'à chaque couche de substrat collecteur de courant anodique (10).

2. Batterie selon la revendication 1, **caractérisée en ce que** chaque substrat collecteur de courant anodique (10) fait saillie par rapport à un premier plan d'extrémité (DYₐ), ce premier plan étant défini par les premières extrémités longitudinales de chaque couche d'anode, de chaque couche de matériau d'électrolyte ou couche de séparateur, de chaque couche de cathode ainsi que de chaque couche de substrat collecteur de courant cathodique.

3. Batterie selon la revendication 1 ou 2, **caractérisée en ce que** chaque substrat collecteur de courant cathodique (40) fait saillie par rapport à un second plan d'extrémité (DY'ₐ), ce second plan étant défini par les secondes extrémités longitudinales de chaque couche d'anode, de chaque couche de matériau d'électrolyte ou couche de séparateur, de chaque couche de cathode ainsi que de chaque couche de substrat collecteur de courant anodique.

4. Batterie selon l'une des revendications 1 à 3, **caractérisée en ce qu'**elle comprend un système d'encapsulation recouvrant au moins en partie la périphérie extérieure de l'empilement (I), ledit système d'encapsulation (95) recouvrant les faces frontales de l'empilement (F1, F2), les faces latérales (F3, F5) et au moins en partie les faces longitudinales (F4, F6) de sorte que
- seul chaque chant anodique (1002') de chaque substrat collecteur de courant anodique (10) faisant saillie par rapport à la fois à chaque couche d'anode (20), à chaque couche de matériau d'électrolyte (30) ou couche de séparateur (31), à chaque couche de cathode (50) ainsi qu'à chaque couche de substrat collecteur de courant cathodique (40) selon le premier sens longitudinal (XX') de la batterie, affleure une première face longitudinale (F6), et que
- seul chaque chant cathodique (1006') de chaque substrat collecteur de courant cathodique (40) faisant saillie par rapport à la fois à chaque couche d'anode (20), à chaque couche de matériau d'électrolyte (30) ou couche de séparateur (31), à chaque couche de cathode (50) ainsi qu'à chaque couche de substrat collecteur de courant anodique (20) selon le second sens longitudinal (XX") de la batterie, affleure une seconde face longitudinale (F4), ladite seconde face longitudinale (F4) étant de préférence opposée et parallèle à la première face longitudinale (F6),
étant entendu que chaque chant anodique (1002') définit une zone de connexion anodique (1002) et que chaque chant cathodique (1006') définit une zone de connexion cathodique (1006).

5. Batterie selon la revendication 4, **caractérisée en ce que** le système d'encapsulation (95) comprend:
- optionnellement, une première couche de recouvrement, de préférence choisie parmi le parylène, le parylène de type F, le polyimide, les résines époxy, le silicone, le polyamide, la silice sol-gel, la silice organique et/ou un mélange de ceux-ci, déposée sur au moins en partie la périphérie extérieure de l'empilement (I),
- optionnellement une deuxième couche de recouvrement composée d'une matière électriquement isolante déposée par dépôt de couches atomiques, sur au moins en partie la périphérie extérieure de l'empilement (I), ou sur la première couche de recouvrement,
- au moins une troisième couche de recouvrement étanche, de préférence ayant une perméance à la vapeur d'eau (WVTR) inférieure à 10⁻⁵ g/m².d, cette troisième couche de recouvrement étant composée d'un matériau céramique et/ou d'un verre à bas point de fusion, de préférence d'un verre dont le point de fusion est inférieur à 600°C, déposée sur au moins en partie la périphérie extérieure de l'empilement (I), ou sur la première couche de recouvrement,
étant entendu que lorsque ladite deuxième couche de recouvrement est présente,
- une succession de ladite deuxième couche de recouvrement et de ladite troisième couche de recouvrement peut être répétée z fois avec z ≥ 1 et déposée à la périphérie externe d'au moins la troisième couche de recouvrement, et
- la dernière couche du système d'encapsulation étant une couche de recouvrement étanche, de préférence ayant une perméance à la vapeur d'eau (WVTR) inférieure à 10⁻⁵ g/m².d et étant composée d'un matériau céramique et/ou d'un verre à bas point de fusion.

6. Batterie selon l'une quelconque des revendications 1 à 5, **caractérisée en ce qu'**au moins la zone de connexion anodique (1002), de préférence la première face longitudinale (F6) comprenant au moins la zone de connexion anodique (1002), est recouverte par un organe de contact anodique (97'),
et **en ce qu'**au moins la zone de connexion cathodique (1006), de préférence la seconde face longitudinale (F4) comprenant au moins la zone de connexion cathodique (1006), est recouverte par un organe de contact cathodique (97"),
étant entendu que lesdits organes de contact anodique (97') et cathodique (97") sont aptes à assurer le contact électrique entre l'empilement (I) et un élément conducteur externe.

7. Batterie selon la revendication 6, **caractérisée** en ce chacun des organes de contact anodique (97') et cathodique (97") comprend :
- une première couche de connexion électrique, disposée sur au moins la zone de connexion anodique (1002) et au moins la zone de connexion cathodique (1006), de préférence sur la première face longitudinale (F6) comprenant au moins la zone de connexion cathodique (1002) et sur la seconde face longitudinale (F4) comprenant au moins la zone de connexion cathodique (1006),
cette première couche comprenant un matériau chargé en particules électriquement conductrices, de préférence une résine polymérique et/ou un matériau obtenu par un procédé sol-gel, chargé en particules électriquement conductrices et encore plus préférentiellement une résine polymérique chargée en graphite,
- une deuxième couche de connexion électrique comprenant une feuille métallique disposée sur la première couche de matériau chargé en particules électriquement conductrices.

8. Batterie selon l'une quelconque des revendications 1 à 7, **caractérisée en ce que** la plus petite distance (Dca) entre la première face longitudinale (F6) comprenant au moins une zone de connexion anodique (1002) et le premier plan d'extrémité (DYₐ) défini par les premières extrémités longitudinales de chaque couche d'anode (20), de chaque couche de matériau d'électrolyte (30) et/ou couche de séparateur (31), de chaque couche de cathode (50) ainsi que de chaque couche de substrat collecteur de courant cathodique (40) est comprise entre 0,01 mm et 0,5 mm, et/ou **en ce que** la plus petite distance (Dcc) entre la seconde face longitudinale (F4) comprenant au moins une zone de connexion cathodique (1006) et le second plan d'extrémité (DY'ₐ) défini par les secondes extrémités longitudinales de chaque couche d'anode (20), de chaque couche de matériau d'électrolyte (30) et/ou couche de séparateur (31), de chaque couche de cathode (50) ainsi que de chaque couche de substrat collecteur de courant anodique (10) est comprise entre 0,01 mm et 0,5 mm.

9. Procédé de fabrication d'au moins une batterie (1000),
chaque batterie comprenant au moins une cellule élémentaire (100),
chaque cellule élémentaire (100) comprend successivement un substrat collecteur de courant anodique (10), une couche d'anode (20), au moins une couche d'un matériau d'électrolyte (30) et/ou au moins une couche d'un séparateur (31) imprégné d'un électrolyte, une couche de cathode (50), et un substrat collecteur de courant cathodique (40),
sachant que dans le cas où ladite batterie (1000) comprend une pluralité de cellules élémentaires (100, 100', 100"), lesdites cellules élémentaires (100, 100', 100") sont disposées les unes au-dessous des autres, à savoir superposées selon une direction frontale (ZZ) au plan principal de la batterie, de sorte que, de préférence :
∘ le substrat collecteur de courant anodique (10) est le substrat collecteur de courant anodique (10) de deux cellules élémentaires (100, 100') adjacentes, et en ce que
∘ le substrat collecteur de courant cathodique (40) est le substrat collecteur de courant cathodique (40) de deux cellules élémentaires (100, 100') adjacentes,
ladite au moins cellule élémentaire (100) ou lesdites cellules élémentaires (100, 100', 100") définissent un empilement (I),
ledit empilement (I) et ladite batterie (1000) présentant six faces, à savoir,
- deux faces dites frontales (F1, F2) mutuellement opposées, en particulier mutuellement parallèles, globalement parallèles au(x) substrat(s) collecteur de courant anodique (10), au(x) couche(s) d'anode (20), au(x) couche(s) d'un matériau d'électrolyte (30) ou au(x) couche(s) de séparateur (31) imprégné d'un électrolyte, au(x) couche(s) de cathode (50), et au(x) substrat(s) collecteur de courant cathodique (40),
- deux faces dites latérales (F3, F5) mutuellement opposées, en particulier mutuellement parallèles,
- et deux faces dites longitudinales (F4, F6), mutuellement opposées, en particulier mutuellement parallèles,
étant entendu que la première face longitudinale (F6) de la batterie comprend au moins une zone de connexion anodique (1002) et qu'une seconde face longitudinale (F4) de la batterie comprend au moins une zone de connexion cathodique (1006), lesdites zones de connexion anodique (1002) et cathodique (1006) étant latéralement opposées,
de sorte que
- selon un premier sens longitudinal (XX') de la batterie, chaque substrat collecteur de courant anodique (10) fait saillie par rapport à la fois à chaque couche d'anode (20), à chaque couche de matériau d'électrolyte (30) ou couche de séparateur (31) imprégné d'un électrolyte, à chaque couche de cathode (50) ainsi qu'à chaque couche de substrat collecteur de courant cathodique (40), et
- selon un second sens longitudinal (XX") de la batterie, opposé audit premier sens longitudinal (XX'), chaque substrat collecteur de courant cathodique (40) fait saillie par rapport à la fois à chaque couche d'anode (20), à chaque couche de matériau d'électrolyte (30) ou couche de séparateur (31) imprégné d'un électrolyte, à chaque couche de cathode (50) ainsi qu'à chaque couche de substrat collecteur de courant anodique (10),
ledit procédé de fabrication comprenant :
(i) l'approvisionnement d'au moins une feuille de substrat collecteur de courant anodique (10) présentant des fentes (80), des zones non revêtues (82) et des zones revêtues (81) d'une couche d'anode (20), optionnellement revêtue d'une couche d'un matériau d'électrolyte (30) ou d'une couche de séparateur (31), appelée ci-après feuille anodique (2e),
(ii) l'approvisionnement d'au moins une feuille de substrat collecteur de courant cathodique (40) présentant des fentes (70), des zones non revêtues (72) et des zones revêtues (71) d'une couche de cathode (50), optionnellement revêtue d'une couche d'un matériau d'électrolyte (30) ou d'une couche de séparateur (31), appelée ci-après feuille cathodique (5e),
(iii) la réalisation d'un empilement (I) alterné d'au moins une feuille anodique (2e) présentant des fentes (80), des zones non revêtues (82) et des zones revêtues (81) et d'au moins une feuille cathodique (5e) présentant des fentes (70), des zones non revêtues (72) et des zones revêtues (71), de manière à obtenir au moins une cellule élémentaire comprenant successivement un substrat collecteur de courant anodique (10), une couche d'anode (20), au moins une couche d'un matériau d'électrolyte (30) ou d'un séparateur (31), une couche de cathode (50), et un substrat collecteur de courant cathodique (40), et
de manière à ce que
∘ selon le premier sens longitudinal (XX') de la batterie, chaque substrat collecteur de courant anodique (10) fait saillie par rapport à la fois à chaque couche d'anode (20), à chaque couche de matériau d'électrolyte (30) et/ou couche de séparateur (31), à chaque couche de cathode (50) ainsi qu'à chaque couche de substrat collecteur de courant cathodique (40), et
∘ selon le second sens longitudinal (XX") de la batterie, opposé audit premier sens longitudinal (XX'), chaque substrat collecteur de courant cathodique (40) fait saillie par rapport à la fois à chaque couche d'anode (20), à chaque couche de matériau d'électrolyte (31) et/ou couche de séparateur (31), à chaque couche de cathode (50) ainsi qu'à chaque couche de substrat collecteur de courant anodique (10),
(iv) la réalisation d'un traitement thermique et/ou d'une compression mécanique de l'empilement (I) de feuilles alternées obtenu à l'étape (iii), de manière à former un empilement consolidé,
(v) optionnellement, la réalisation d'une première paire de découpes (DXn, DX'n) permettant de séparer une ligne (Lₙ) de batteries (1000) donnée vis-à-vis d'au moins une autre ligne (Lₙ₋₁, Lₙ₊₁) de batteries (1000) formée à partir dudit empilement consolidé,
(vi) optionnellement, l'imprégnation de l'empilement consolidé obtenu à l'étape (iv) ou l'imprégnation de la ligne (Lₙ) de batteries (1000) obtenue à l'étape (v) lorsque l'étape (v) est réalisée, par une phase porteuse d'ions de lithium telle que des électrolytes liquides ou un liquide ionique contenant des sels de lithium, de sorte que ladite couche de séparateur (31) soit imprégnée par un électrolyte,
(vii) la réalisation d'une seconde paire de découpes (DYn, DY'n) permettant de mettre à nu
1. le chant anodique (1002') de chaque substrat collecteur de courant anodique (10) faisant saillie par rapport à la fois à chaque couche d'anode (20), à chaque couche de matériau d'électrolyte (30) ou couche de séparateur (31), à chaque couche de cathode (50) ainsi qu'à chaque couche de substrat collecteur de courant cathodique (40) selon le premier sens longitudinal (XX') de la batterie, chaque chant anodique (1002') définissant au moins une zone de connexion anodique (1002), et
2. le chant cathodique (1006') de chaque substrat collecteur de courant cathodique (40) faisant saillie par rapport à la fois à chaque couche d'anode (20), à chaque couche de matériau d'électrolyte (30) ou couche de séparateur (31), à chaque couche de cathode (50) ainsi qu'à chaque couche de substrat collecteur de courant anodique (10) selon le second sens longitudinal (XX") de la batterie, chaque chant cathodique (1006') définissant au moins une zone de connexion cathodique (1006),
ladite seconde paire de découpes (DYn, DY'n) permettant, lorsque l'étape (v) est réalisée, de séparer une batterie donnée vis-à-vis d'au moins une autre batterie formée à partir de la ligne (Lₙ) de batteries (1000).

10. Procédé selon la revendication 9, **caractérisé en ce qu'**on réalise,
après l'étape (vi) si elle est réalisée,
ou si l'étape (vi) n'est pas réalisée, après l'étape (v) si l'étape (v) est réalisée,
ou si les étapes (vi) et (v) ne sont pas réalisées, après l'étape (iv),
et avant l'étape (vii),
une étape (viii) d'encapsulation de l'empilement consolidé ou de la ligne (Lₙ) de batteries (1000), de préférence, dans laquelle on recouvre, par un système d'encapsulation (95), au moins en partie la périphérie extérieure de l'empilement (I) ou de la ligne (Lₙ) de batteries (1000), de préférence, les faces frontales de l'empilement (F1, F2) ou de la ligne (Lₙ) de batteries (FF1, FF2), les faces latérales (F3, F5, FF3, FF5) et au moins en partie les faces longitudinales (F4, F6, FF4, FF6) de sorte que
∘ seul chaque chant anodique (1002') de chaque substrat collecteur de courant anodique (10) faisant saillie par rapport à la fois à chaque couche d'anode (20), à chaque couche de matériau d'électrolyte (30) ou couche de séparateur (31), à chaque couche de cathode (50) ainsi qu'à chaque couche de substrat collecteur de courant cathodique (40) selon le premier sens longitudinal (XX') de la batterie, affleure une première face longitudinale (F6, FF6), et que
∘ seul chaque chant cathodique (1006') de chaque substrat collecteur de courant cathodique (40) faisant saillie par rapport à la fois à chaque couche d'anode (20), à chaque couche de matériau d'électrolyte (30) ou couche de séparateur (31), à chaque couche de cathode (50) ainsi qu'à chaque couche de substrat collecteur de courant anodique (10) selon le second sens longitudinal (XX") de la batterie, affleure une seconde face longitudinale (F4, FF4), ladite seconde face longitudinale (F4, FF4) étant de préférence opposée et parallèle à la première face longitudinale (F6, FF6),
étant entendu que chaque chant anodique (1002') définit une zone de connexion anodique (1002) et que chaque chant cathodique (1006') définit une zone de connexion cathodique (1006) ;
ledit système d'encapsulation (95) comprenant, de préférence,
- optionnellement, au moins une première couche de recouvrement, de préférence choisie parmi le parylène, le parylène de type F, le polyimide, les résines époxy, le silicone, le polyamide, la silice sol-gel, la silice organique et/ou un mélange de ceux-ci, déposée sur au moins en partie la périphérie extérieure de l'empilement (I) ou de la ligne (Lₙ) de batteries (1000),
- optionnellement une deuxième couche de recouvrement composée d'une matière électriquement isolante déposée par dépôt de couches atomiques,
- sur au moins en partie la périphérie extérieure de l'empilement (I) ou de la ligne (Lₙ) de batteries (1000)
- ou sur la première couche de recouvrement, et
- au moins une troisième couche de recouvrement étanche, de préférence ayant une perméance à la vapeur d'eau (WVTR) inférieure à 10⁻⁵ g/m².d, cette troisième couche de recouvrement étant composée d'un matériau céramique et/ou d'un verre à bas point de fusion, de préférence d'un verre dont le point de fusion est inférieur à 600°C, déposée sur au moins en partie la périphérie extérieure de l'empilement (I) ou de la ligne (Lₙ) de batteries (1000), ou de la première couche de recouvrement,
étant entendu qu'une séquence d'au moins une deuxième couche de recouvrement et d'au moins une troisième couche de recouvrement peut être répétée z fois avec z ≥ 1 et déposée à la périphérie externe d'au moins la troisième couche de recouvrement, et que la dernière couche du système d'encapsulation est une couche de recouvrement étanche, de préférence ayant une perméance à la vapeur d'eau (WVTR) inférieure à 10⁻⁵ g/m².d et étant composée d'un matériau céramique et/ou d'un verre à bas point de fusion.

11. Procédé selon l'une quelconque des revendications 9 ou 10, **caractérisé en ce qu'**après l'étape (vii), on recouvre au moins la zone de connexion anodique (1002), de préférence au moins la première face longitudinale (F6) comprenant au moins la zone de connexion anodique (1002), par un organe de contact anodique (97'), apte à assurer le contact électrique entre l'empilement (I) et un élément conducteur externe,
et **en ce qu'**on recouvre au moins la zone de connexion cathodique (1006), de préférence au moins la seconde face longitudinale (F4) comprenant au moins la zone de connexion cathodique (1006), par un organe de contact cathodique (97"), apte à assurer le contact électrique entre l'empilement (I) et un élément conducteur externe, ladite réalisation d'organes de contact anodique (97') et cathodique (97") comprenant :
- le dépôt sur au moins la zone de connexion anodique (1002) et sur au moins la zone de connexion cathodique (1006), de préférence, sur au moins la première face longitudinale (F6) comprenant au moins la zone de connexion anodique (1002), et sur au moins la seconde face longitudinale (F4) comprenant au moins la zone de connexion cathodique (1006), d'une première couche de connexion électrique de matériau chargé en particules électriquement conductrices, ladite première couche étant de préférence formée de résine polymérique et/ou d'un matériau obtenu par un procédé sol-gel chargé en particules électriquement conductrices,
- optionnellement, lorsque ladite première couche est formée de résine polymérique et/ou d'un matériau obtenu par un procédé sol-gel chargé en particules électriquement conductrices, une étape de séchage suivie d'une étape de polymérisation de ladite résine polymérique et/ou dudit matériau obtenu par un procédé sol-gel, et
- le dépôt, sur la première couche, d'une deuxième couche de connexion électrique comprenant une feuille métallique disposée sur la première couche de connexion électrique,
- optionnellement, le dépôt sur la deuxième couche de connexion électrique, d'une troisième couche de connexion électrique comprenant une encre conductrice.

12. Procédé selon l'une quelconque des revendications 9 à 11, **caractérisé en ce que** les découpes réalisées à l'étape (v) lorsque cette étape est réalisée, et/ou à l'étape (vii), sont effectuées par ablation laser, de préférence **en ce que** toutes les découpes réalisées à l'étape (v) lorsque cette étape est réalisée, et/ou à l'étape (vii) sont effectuées par laser.
